# EUROPEAN PATENT APPLICATION

(11) **EP 4 542 978 A1**
(43) Date of publication of application: **23.04.2025**
(21) Application number: 23870404.3
(22) Date of filing: 15.09.2023
(51) Int. Cl.: H04M 1/725, G06F 13/10, G06F 3/16

(54) **DEVICE MANAGEMENT METHOD AND ELECTRONIC DEVICE**

(30) Priority: 30.09.2022 CN 202211214682
(71) Applicant: Huawei Technologies Co., Ltd., Shenzhen, Guangdong 518129 (CN)
(72) Inventor: JIN, Wei, Shenzhen, Guangdong 518129 (CN); CHEN, Yangming, Shenzhen, Guangdong 518129 (CN); ZHANG, Chenxu, Shenzhen, Guangdong 518129 (CN); ZHANG, Limei, Shenzhen, Guangdong 518129 (CN); CHEN, Shaojun, Shenzhen, Guangdong 518129 (CN)
(74) Representative: Goddar, Heinz J.
(86) International application number: PCT/CN2023/119176
(87) International publication number: WO 2024/067170

(57) **Abstract**

Embodiments of this application provide a device management method and an electronic device, and relate to the field of terminal device technologies. The method includes: The electronic device is provided with an application that has a call function, where the application is not a system call application, an available call device list may be displayed in an application interface, to implement unified management and switching of call devices.

## Description

This application claims priority to Chinese Patent Application No. 202211214682.7, filed with the China National Intellectual Property Administration on September 30, 2022 and entitled "DEVICE MANAGEMENT METHOD AND ELECTRONIC DEVICE", which is incorporated herein by reference in its entirety.

### TECHNICAL FIELD

Embodiments of this application relate to the field of terminal device technologies, and in particular, to a device management method and an electronic device.

### BACKGROUND

With development of communication technologies and improvement of a computing capability and a hardware capability of an electronic device, a call function of the electronic device is increasingly powerful.

Currently, the electronic device has a poor effect of managing a call device (for example, a Bluetooth headset, a wired earphone, or Bluetooth glasses) of the electronic device.

### SUMMARY

To resolve the foregoing technical problem, this application provides a device management method and an electronic device. In the method, the electronic device is provided with an application that has a call function, where the application is not a system call application, an available call device list may be displayed in an application interface, to implement unified management and switching of call devices. In this way, a call device management effect is good.

According to a first aspect, an embodiment of this application provides a device management method, applied to an electronic device. The electronic device is communicatively connected to at least one Bluetooth device, and the at least one Bluetooth device supports an audio input function and an audio output function. The method includes: displaying a first interface of a first application, where the first interface includes first information, the first information includes information that indicates a first call device of the electronic device, the first call device includes the at least one Bluetooth device, the first application is different from a system application, and the first application has the audio input function and the audio output function.

For example, the first application may be a third-party application, and has a call function (for example, an audio call function and/or a video call function). The call function described in this application includes the audio input function and the audio output function. Similarly, a call device described in this application is used to represent an audio device having the audio input function and the audio output function.

For example, the first application is a MeeTime application, and the first interface may be a call interface.

For example, there may be one or more first call devices, and the first call device may be a device in an available call device list.

For example, the first call device may also include a non-Bluetooth device, for example, an earpiece, a loudspeaker, or a wired earphone.

According to the first aspect, the method further includes: displaying a second interface of a second application, where the second interface includes second information, the second information includes the information that indicates the first call device, the second application is a system application, and the second application does not have the audio input function and the audio output function.

For example, the second application may be a control center.

In this embodiment, available call device lists in respective interfaces of a call application and the control center can be the same.

According to the first aspect or any one of the foregoing implementations of the first aspect, the first interface further includes third information, the third information indicates a second call device, and the second call device is a device that is in the first call device and that is currently used for a call.

For example, the third information indicates a call device that is currently in use.

According to the first aspect or any one of the foregoing implementations of the first aspect, the second interface further includes fourth information, and the fourth information indicates the second call device.

In this embodiment, information about currently used call devices displayed in the respective interfaces of the call application and the control center can be the same.

According to the first aspect or any one of the foregoing implementations of the first aspect, after the displaying a first interface of a first application, the method further includes: in response to a received first user operation, switching from the call device indicated by the third information in the first interface to a third call device, and changing the device currently used for a call to the third call device, where the first call device includes the third call device; and in response to a received second user operation, displaying the second interface, where switching from the call device indicated by the fourth information in the second interface to the third call device is performed.

In this embodiment, the currently used call device can be switched in the call application, so that the control center can synchronously switch the displayed currently used call device, and switched current call devices displayed in the respective interfaces of the call application and the control center are the same.

According to the first aspect or any one of the foregoing implementations of the first aspect, after the displaying a second interface, the method further includes: in response to a received third user operation, switching from the call device indicated by the fourth information in the second interface to a fourth call device, where the first call device includes the fourth call device; and
in response to a received fourth user operation, displaying the first interface, where switching from the call device indicated by the third information in the first interface to the fourth call device is performed.

For example, the fourth call device may be the same as or different from the third call device.

For example, the current call device is switched in the control center, so that the call application can synchronously switch the current call device, and the switched current call devices are the same. The current call device is switched in the call application, so that the control center synchronously switches the current call device, and the switched current call devices are the same.

According to the first aspect or any one of the foregoing implementations of the first aspect, after the switching from the call device indicated by the fourth information in the second interface to a fourth call device, the method further includes: changing the device currently used for a call to the fourth call device.

According to the first aspect or any one of the foregoing implementations of the first aspect, the electronic device includes a first system interface, and the first application registers a first callback function for the first system interface; and the displaying a first interface of a first application includes: when detecting that a connection to at least one fifth call device is established or disconnected, obtaining information about the first call device; and displaying the first information in the first interface of the first application based on the information about the first call device and by using the first callback function.

For example, if the fifth call device establishes the connection to the electronic device, the first call device may include the fifth call device. If the fifth call device disconnects from the electronic device, the first call device does not include the fifth call device.

For example, an audio framework may write the available call device list into the first callback function as a parameter, and trigger execution of the first callback function, so that the first application can display the first information in the first interface.

According to the first aspect or any one of the foregoing implementations of the first aspect, the second application registers a second callback function for the first system interface; and the displaying a second interface of a second application includes: when detecting that the connection to the at least one fifth call device is established or disconnected, obtaining the information about the first call device; and displaying the second information in the second interface of the second application based on the information about the first call device and by using the second callback function.

For example, the audio framework may write the information about the currently used call device into the second callback function as a parameter, and trigger execution of the second callback function. In this way, an application can obtain updated information about the currently used call device.

According to the first aspect or any one of the foregoing implementations of the first aspect, the electronic device further includes a second system interface, and the first application registers a third callback function for the second system interface; and the displaying a first interface of a first application includes: when detecting that the device currently used for a call changes, obtaining information about a changed device currently used for a call; and displaying the third information in the first interface of the first application based on the information about the changed device currently used for a call and by using the third callback function.

For example, the currently used call device changes from a call device A to another call device B. The call device A and the call device B may be call devices in the first call device, namely, call devices in the available call device list. Alternatively, the call device A or the call device B is not a call device in the available call device list. For example, the call device B is newly connected, and the current call device changes from the call device A to the call device B. For another example, the call device A is disconnected, and the current call device changes from the call device A to the call device B. In all the foregoing cases, execution of the third callback function can be triggered, to display, in the first interface, the information about the changed device currently used for a call.

According to the first aspect or any one of the foregoing implementations of the first aspect, the second application registers a fourth callback function for the second system interface; and the displaying a second interface of a second application includes: when detecting that the device currently used for a call changes, obtaining the information about the changed device currently used for a call; and displaying the fourth information in the second interface of the second application based on the information about the changed device currently used for a call and by using the fourth callback function.

For example, an implementation principle of this embodiment is similar to an implementation principle of the foregoing implementation of the third callback function. Details are not described herein again.

According to the first aspect or any one of the foregoing implementations of the first aspect, the electronic device further includes a third system interface, and the changing the device currently used for a call to the third call device includes: obtaining information about the third call device through the third system interface, where the information about the third call device includes information that indicates a device type; and changing, based on device types (Bluetooth devices or non-Bluetooth devices) of the second call device and the third call device, the device currently used for a call from the second call device to the third call device.

For example, the third system interface may be a call device switching interface. The application may invoke the call device switching interface, and encapsulate the information about the third call device into a unified device type, to transfer the unified device type to the call device switching interface, so as to change the currently used call device.

According to the first aspect or any one of the foregoing implementations of the first aspect, the second call device is a Bluetooth device (for example, a Bluetooth headset), the third call device is a non-Bluetooth device (for example, a wired earphone or an earpiece), and the changing, based on device types of the second call device and the third call device, the device currently used for a call from the second call device to the third call device includes: setting the third call device as a call device with a highest priority in a call policy, where the call policy is a policy used to select the device currently used for a call; and disconnecting a communication channel (for example, an SCO channel) of the second call device.

According to the first aspect or any one of the foregoing implementations of the first aspect, the second call device is a Bluetooth device, the third call device is a Bluetooth device, and the changing, based on device types of the second call device and the third call device, the device currently used for a call from the second call device to the third call device includes: disconnecting a communication channel of the second call device; establishing a communication channel of the third call device; and switching a communication channel connected to a call audio to the communication channel of the third call device.

In this way, the application can switch the currently used call device between different Bluetooth devices in the application.

According to the first aspect or any one of the foregoing implementations of the first aspect, the second call device is a non-Bluetooth device, the third call device is a Bluetooth device, and the changing, based on device types of the second call device and the third call device, the device currently used for a call from the second call device to the third call device includes: establishing a communication channel of the third call device; and connecting a call audio to the communication channel of the third call device.

According to the first aspect or any one of the foregoing implementations of the first aspect, information about any one call device is a target device type, and the target device type includes device attribute information and an interface used to obtain or set the device attribute information.

According to the first aspect or any one of the foregoing implementations of the first aspect, the device attribute information includes: a device type number, a device address, and a device name.

According to a second aspect, an embodiment of this application provides a device management apparatus. The apparatus is configured to perform the method according to the first aspect and any one of the implementations of the first aspect.

The second aspect and any one of implementations of the second aspect respectively correspond to the first aspect and any one of the implementations of the first aspect. For technical effects corresponding to the second aspect and the any one of the implementations of the second aspect, refer to technical effects corresponding to the first aspect and any one of the implementations of the first aspect. Details are not described herein again.

According to a third aspect, an embodiment of this application provides an electronic device. The electronic device includes a memory and a processor, where the memory is coupled to the processor, the memory stores program instructions, and when the program instructions are executed by the processor, the electronic device is enabled to perform the method according to the first aspect and any one of the implementations of the first aspect.

For technical effects corresponding to the third aspect, refer to technical effects corresponding to the first aspect and any one of the implementations of the first aspect. Details are not described herein again.

According to a fourth aspect, an embodiment of this application provides a computer-readable medium. The computer-readable medium is configured to store a computer program. When the computer program is run on an electronic device, the electronic device is enabled to perform the method according to the first aspect and any one of the implementations of the first aspect.

For technical effects corresponding to the fourth aspect, refer to technical effects corresponding to the first aspect and any one of the implementations of the first aspect. Details are not described herein again.

According to a fifth aspect, an embodiment of this application provides a computer program product including instructions. When the computer program product runs on a computer, the computer is enabled to perform the method according to the first aspect and any one of the implementations of the first aspect.

For technical effects corresponding to the fifth aspect, refer to technical effects corresponding to the first aspect and any one of the implementations of the first aspect. Details are not described herein again.

According to a sixth aspect, an embodiment of this application provides a chip. The chip includes one or more interface circuits and one or more processors. The interface circuit is configured to: receive a signal from a memory of an electronic device, and send the signal to the processor. The signal includes computer instructions stored in the memory. When the processor executes the computer instructions, the electronic device is enabled to perform the method according to the first aspect and any one of the implementations of the first aspect.

For technical effects corresponding to the sixth aspect, refer to technical effects corresponding to the first aspect and any one of the implementations of the first aspect. Details are not described herein again.

### BRIEF DESCRIPTION OF DRAWINGS

To describe technical solutions in embodiments of this application more clearly, the following briefly introduces accompanying drawings for describing embodiments of this application. It is clear that the accompanying drawings in the following descriptions show only some embodiments of this application, and a person of ordinary skill in the art may still derive other drawings from these accompanying drawings without creative efforts.
FIG. 1 is a diagram 1 of an example of a structure of an electronic device;
FIG. 2 is a diagram of an example of a software structure of an electronic device;
FIG. 3a is a diagram of an example of a structure of a system framework;
FIG. 3b is a diagram of an example of a device management process;
FIG. 3c is a diagram of an example of a device management process;
FIG. 3d is a diagram of an example of a device management process;
FIG. 4a(1) to FIG. 4a(3) are a diagram of an example of an application scenario;
FIG. 4b(1) and FIG. 4b(2) are a diagram of an example of an application scenario;
FIG. 4c(1) to FIG. 4c(3) are a diagram of an example of an application scenario;
FIG. 4d(1) to FIG. 4d(4) are a diagram of an example of an application scenario;
FIG. 4e(1) to FIG. 4e(4) are a diagram of an example of an application scenario; and
FIG. 5 is a diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "plurality of" means two or more than two. For example, a plurality of processing units mean two or more processing units, and a plurality of systems mean two or more systems.

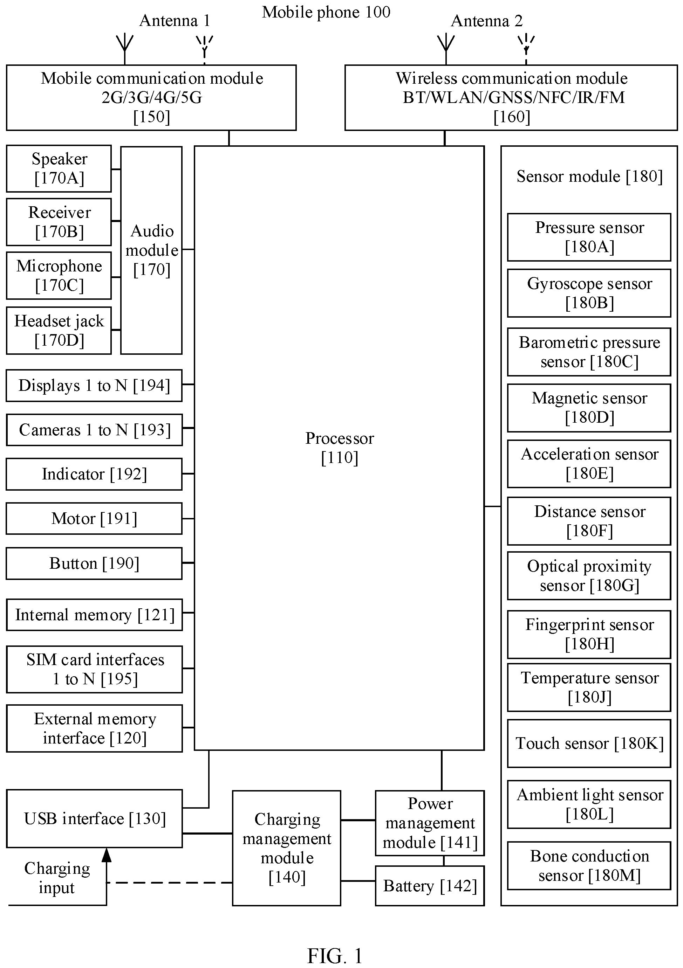

FIG. 1 is a diagram of a structure of an electronic device 100. It should be understood that the electronic device 100 shown in FIG. 1 is merely an example of an electronic device. Optionally, the electronic device 100 may be a terminal, or may be referred to as a terminal device. The terminal may be an electronic device that has audio input and audio output functions, like a cellular phone (cellular phone), a tablet computer (pad), a wearable device, or an internet of things device. This is not limited in this application. It should be noted that the electronic device 100 may have more or fewer components than those shown in the figure, may combine two or more components, or may have different component configurations. Various components shown in FIG. 1 may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. It can also be used to connect to a headset and play audio through the headset. The interface may be further configured to connect to another electronic device, for example, an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger, or may be a wired charger. In some embodiments of wired charging, the charging management module 140 may receive charging input from the wired charger through the USB interface 130. In some embodiments of wireless charging, the charging management module 140 may receive wireless charging input through a wireless charging coil of the electronic device 100. When charging the battery 142, the charging management module 140 may further supply power to the electronic device by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may also be disposed in the processor 110. In some other embodiments, the power management module 141 and the charging management module 140 may also be disposed in a same component.

A wireless communication function of the electronic device 100 may be implemented through an antenna 1, an antenna 2, a mobile communication module 150, a wireless communication module 160, a modem processor, a baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that is applied to the electronic device 100 and includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave signal to the modem processor for demodulation. The mobile communication module 150 may further amplify the signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is used to perform mathematical and geometric calculations, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement an image shooting function by using the ISP, the camera 193, the video codec, the GPU, the display 194, the application processor, and the like.

The camera 193 is configured to capture a static image or a video. An optical image of an object is generated through the lens, and is projected onto the photosensitive element.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and videos can be saved on the external memory card.

The internal memory 121 may be configured to store computer-executable program code, where the executable program code includes instructions. The processor 110 runs the instructions stored in the internal memory 121, so that the electronic device 100 performs the method in embodiments of this application. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be used for an incoming call vibration prompt and a touch vibration feedback. For example, touch operations performed on different applications (such as photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195, or removed from the SIM card interface 195, to implement contact and separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. Types of the plurality of cards may be the same or different. The SIM card interface 195 may also be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a microservice architecture, or a cloud architecture. In this embodiment of this application, an Android system with a layered architecture is used as an example to describe the software structure of the electronic device 100.

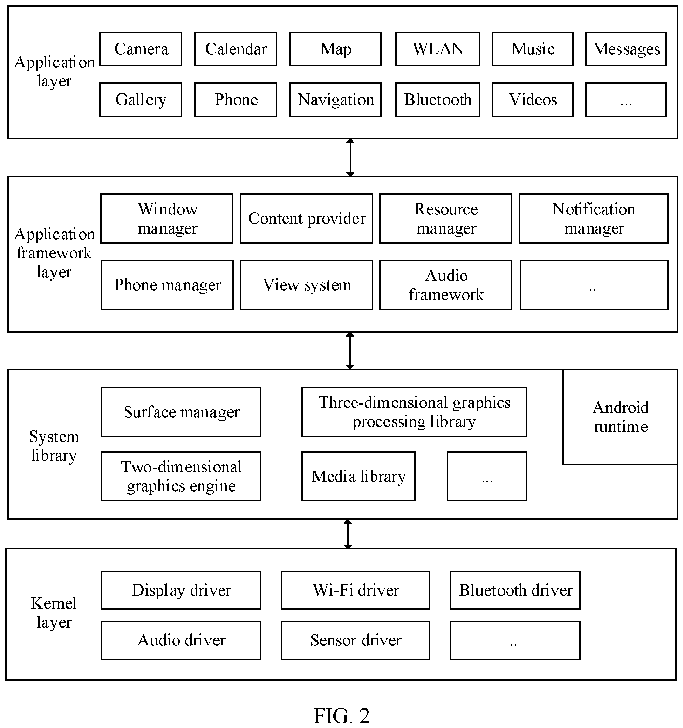

FIG. 2 is a block diagram of the software structure of the electronic device 100 in this embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Call, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, an audio framework, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables the application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The audio framework may separately implement switching of the current call device in the call application and the control center. In addition, the audio framework may enable the call application and the control center to synchronize respective displayed call device lists and information about the currently used call device, and both the displayed call device lists and the currently used call device are correct. Specific application of the audio framework is described in detail below.

A system library and runtime layer includes the system library and Android runtime (Android runtime). The system library may include a plurality of functional modules, for example, a surface manager (surface manager), a media library (Media Library), a three-dimensional graphics processing library (for example, OpenGLES), and a 2D graphics engine (for example, SGL). The 3D graphics library is configured to implement three-dimensional graphics drawing, image rendering, synthesis, layer processing, and the like. The Android runtime includes the core library and virtual machine. The Android runtime is responsible for scheduling and management of an Android system. The core library includes two parts: a performance function that needs to be invoked by the Java language and an Android core library. The application layer and the application framework layer run in the virtual machine. The virtual machine executes java files at the application layer and the application framework layer as binary files. The virtual machine is configured to implement functions such as object lifecycle management, stack management, thread management, security and exception management, and garbage collection.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, and the system library and runtime layer that are shown in FIG. 2 do not constitute any specific limitation on the electronic device 100. In some other embodiments of this application, the electronic device 100 may include more or fewer components than those shown in the figure, or some components may be combined, or some components may be split, or different component arrangements may be used.

With development of electronic devices, in a call scenario, the electronic device may not only support a call device like a built-in speaker or earpiece in implementing an audio call, but also support connections to more call devices to receive and send call audios. For example, the call device may include but is not limited to a Bluetooth headset, a wired earphone, a smart sound box, and Bluetooth glasses.

In some scenarios, when a user uses a call application (which may be a system call application or a third-party call application) of the electronic device to make a call, the user needs to switch a call device currently used by the electronic device, for example, switch from the speaker to the Bluetooth headset to make the call.

Currently, in the conventional technology, when different call applications switch between call devices, switching and management manners of the call device are not unified.

Therefore, this application provides a call device management method and an electronic device, to implement unified management and switching of call devices in different call applications, so that call device lists and information about a currently used call device that are respectively displayed by the call applications (including a system call application and/or a third-party call application) and a control center (a system application) are synchronized and correct.

Before embodiments of this application are described, the following nouns are first defined.

For example, a Bluetooth device is a device connected to the electronic device through Bluetooth, for example, a Bluetooth headset or a Bluetooth sound box.

For example, a non-Bluetooth device is a device connected to the electronic device in a connection manner other than Bluetooth, for example, a wired earphone.

For example, the Bluetooth device may include a Bluetooth device having a call function (also referred to as a Bluetooth call device) and a Bluetooth device without a call function.

For example, the Bluetooth call device is a Bluetooth device having audio input and output functions (also referred to as a call function), for example, a Bluetooth headset or Bluetooth glasses.

For example, if a Bluetooth headset without a microphone has only an audio output function but does not have an audio input function, the Bluetooth headset is a Bluetooth device without the call function.

For example, the non-Bluetooth device may also include a non-Bluetooth device having a call function (also referred to as a non-Bluetooth call device) and a non-Bluetooth device without the call function.

For example, the non-Bluetooth call device may include but is not limited to a speaker, an earpiece, and a wired earphone.

In this case, the call device may include the Bluetooth call device and the non-Bluetooth call device described above.

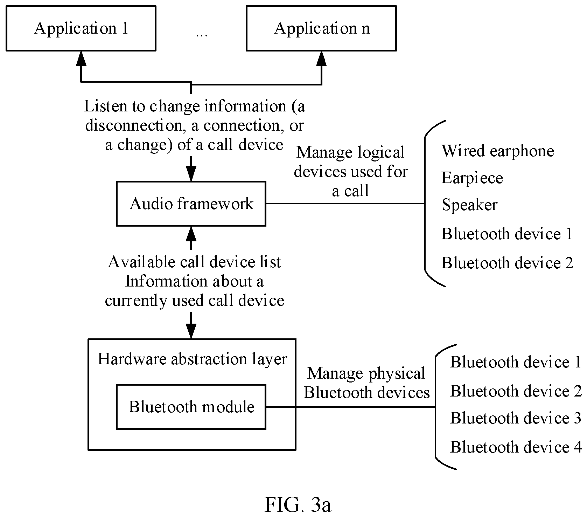

For example, FIG. 3a is a diagram of an example of a system architecture of this application.

For example, as shown in FIG. 3a, a system in this application sequentially includes but is not limited to an application, an audio framework, and a hardware abstraction layer (Hardware Abstraction Layer, HAL) from top to bottom.

For example, as shown in FIG. 3a, n applications may be included, where n ≥ 1.

For example, an application 1 to an application n may include but are not limited to a call application having a call function, for example, a system call application and/or a third-party call application, and may further include a control center (a system management application).

For example, the call function may be an audio call function and/or a video call function. This is not limited in this application.

For example, the application 1 to the application n may include a system telephone application, a MeeTime application, and the control center. This is not limited herein.

For example, the system telephone application or the MeeTime application may perform a voice or video call by using a voice over Internet Protocol (Voice over Internet Protocol, VoIP) technology.

For example, as shown in FIG. 3a, the audio framework may manage, at a logical level, a device (also referred to as a call device) used for a call.

For example, as shown in FIG. 3a, the call device managed by the audio framework may include a non-Bluetooth device (which is a non-Bluetooth call device herein), for example, a wired earphone, an earpiece, or a speaker, and may further include a Bluetooth device (which is a Bluetooth call device herein), for example, a Bluetooth device 1 and a Bluetooth device 2. A quantity of Bluetooth devices that are managed by the audio framework and that are used for a call is not limited herein.

For example, the Bluetooth device 1 may be a Bluetooth headset, and the Bluetooth device 2 may be Bluetooth glasses.

For example, the hardware abstraction layer may manage a physical device.

For example, the hardware abstraction layer may include a Bluetooth module, and the Bluetooth module may be configured to manage the Bluetooth device at a physical level.

For example, the Bluetooth device managed by the Bluetooth module may include Bluetooth devices (for example, the Bluetooth device 1 and the Bluetooth device 2 shown in FIG. 3a) having a call function, and may further include Bluetooth devices (for example, a Bluetooth device 3 and a Bluetooth device 4) having no call function. A quantity of Bluetooth devices managed by the Bluetooth module is not limited herein.

As shown in FIG. 3a, the application 1 to the application n each may register a specified interface provided by the audio framework. For example, the specified interface is used to listen to a change of the call device.

For example, the change of the call device may be caused by disconnection or connection (for example, insertion and removal of a wired earphone) or change (for example, a call device currently used by the electronic device changes from the Bluetooth device 1 to the Bluetooth device 2) of the call device, and therefore, a change of an available call device list and/or a change of a currently used call device are/is caused.

In this case, the application 1 to the application n may listen to change information of the call device through the specified interface of the audio framework, to update available call device lists and/or information about the currently used call device that are displayed by respective applications.

For example, as shown in FIG. 3a, when the HAL detects that the call device is disconnected or connected, or that the currently used call device changes, the HAL may notify the audio framework through a Java native interface (Java Native Interface, JNI), so that the specified interface of the audio framework is executed. By executing the specified interface, the audio framework may obtain the available call device lists and/or the information about the currently used call device from the HAL through the JNI. For example, as shown in FIG. 3a, the audio framework may send the obtained available call device lists and/or the obtained information about the currently used call device to an application that registers the corresponding specified interface.

For example, the audio framework may communicate with the HAL through the JNI. The JNI is not shown in FIG. 3a herein. In another example, the audio framework may alternatively communicate with the HAL through another interface. This is not limited herein.

In this way, the application may listen to the change of the call device by using the audio framework. The audio framework may manage a call device connected to the electronic device, and the call device not only includes a non-Bluetooth call device, but also may include a Bluetooth call device. Therefore, the application may obtain more comprehensive and accurate call device information by using the audio framework, for example, the available call device lists and the information about the currently used call device. Different applications listen to the change of the call device by registering a same set of specified interfaces of the audio framework. In this way, call device lists and the information about the currently used call device that are displayed in application interfaces of different applications can be the same and correct, for example, between the control center and each call application, the call device lists and the information about the currently used call device that are displayed in respective application interfaces are consistent.

For example, in this application, for unified management of all call devices (including the Bluetooth call device and the non-Bluetooth call device) connected to the electronic device, the audio framework in this application provides a unified device type that can describe all the call devices, and information about each call device managed by the audio framework is described by using the unified device type.

For example, the unified device type may include but is not limited to device attribute information, and interfaces separately configured to obtain and set the device attribute information.

For example, the device attribute information may be device attribute information that needs to be used by the electronic device in a call device switching process. For example, the device attribute information may include but is not limited to a device type number, a device address, and a device name.

In this way, the call device managed by the audio framework may have information that meets the unified device type.

For example, the audio framework may distinguish, by using the device type number in the unified device type of the call device, whether the call device is a Bluetooth device or a non-Bluetooth device, to distinguish between the Bluetooth device and the non-Bluetooth device.

For example, when the call device is described by using the unified device type provided in this application, to uniquely identify a call device, for the Bluetooth device, different Bluetooth devices cannot be distinguished by using a device type number, in this case, the audio framework may uniquely identify a Bluetooth device by using a device type number and a device address (herein, a physical address (Media Access Control Address, MAC)) in the unified device type of the call device. For the non-Bluetooth device, the audio framework may uniquely identify a non-Bluetooth device by using a device type number in the unified device type of the call device.

For example, for the device name in the unified device type, when displaying available call device lists, the applications shown in FIG. 3a may display device names of available call devices, so that a user distinguishes between different call devices.

In the implementation of this application, the Bluetooth call device and the non-Bluetooth call device may be described by using the unified device type, thereby facilitating unified management and switching of the call devices.

FIG. 3a is the diagram of the example of the structure of the system framework. It should be understood that the system shown in FIG. 3a is merely an example. The system in this application may have more or fewer components than those shown in the figure, may combine two or more components, or may have different component configurations. Various components shown in FIG. 3a may be implemented in hardware including one or more signal processing and/or application-specific integrated circuits, software, or a combination of hardware and software.

It should be understood that, in the foregoing process in FIG. 3a and subsequent implementations, the information about the call device that is received by the audio framework from an application side or sent to an application side may describe information about a corresponding call device by using the unified device type defined in this application, to implement unified management and switching of the call devices.

For example, for the specified interface that is provided by the audio framework mentioned in the foregoing implementation and that is used to listen to the change of the call device, the specified interface may be a system-level interface.

For example, the specified interface may include but is not limited to a call device disconnection/connection listening interface and a call device change listening interface.

For example, the audio framework in this application further provides the following system-level interfaces: a query interface used to query all available call devices, a call device switching interface, and a current call device query interface (a query interface 2 for short).

For example, the application may invoke the query interface used to query all available call devices, the current call device query interface, and the call device switching interface.

For example, the audio framework may invoke the query interface used to query all available call devices and the current call device query interface.

For example, the application may invoke the call device disconnection/connection listening interface, to register a callback function for the interface. In this case, after the audio framework detects a disconnection and/or connection event of the call device through listening, a query interface 1 is invoked to obtain the available call device list, the available call device list is written into the callback function as a parameter, and execution of the callback function is triggered. In this way, the application can obtain the available call device list.

For example, the application may invoke the call device change listening interface, to register a callback function for the interface. In this case, after the audio framework detects a change event of the call device through listening, the query interface 2 is invoked to obtain information about a currently used call device, the information about the currently used call device is written into the callback function as a parameter, and execution of the callback function is triggered. In this way, the application may obtain information about an updated currently used call device.

For example, the query interface used to query all available call devices may be configured to obtain all Bluetooth devices that are connected to the electronic device and that can be used for a call and/or all non-Bluetooth devices that can be used for a call, to obtain an available call device list and return the list to an invoker. Information about the call device in the list is the unified device type. For example, the invoker may be the audio framework or the call application. This is not limited herein.

For example, the call device switching interface may be configured to generate a switching instruction based on information, in the interface, about a target call device to be changed to, to indicate the audio framework to change the currently used call device to the target call device.

For example, the information about the target call device within the call device switching is the unified device type.

For example, the audio framework may change the currently used call device to the target call device by using the HAL, to trigger the change event of the currently used call device mentioned above.

For example, after the call device switching interface is invoked by the invoker, a change of the currently used call device may be triggered, and information about changed currently used call device may be synchronously updated to the call application and the control center that register a callback function of the call device change listening interface.

The following describes functions and application scenarios of the system-level interfaces provided by the audio framework with reference to accompanying drawings.

### Example 1

The example 1 focuses on implementation processes of the call device disconnection/connection listening interface and the query interface (the query interface 1 for short) for querying all available call devices.

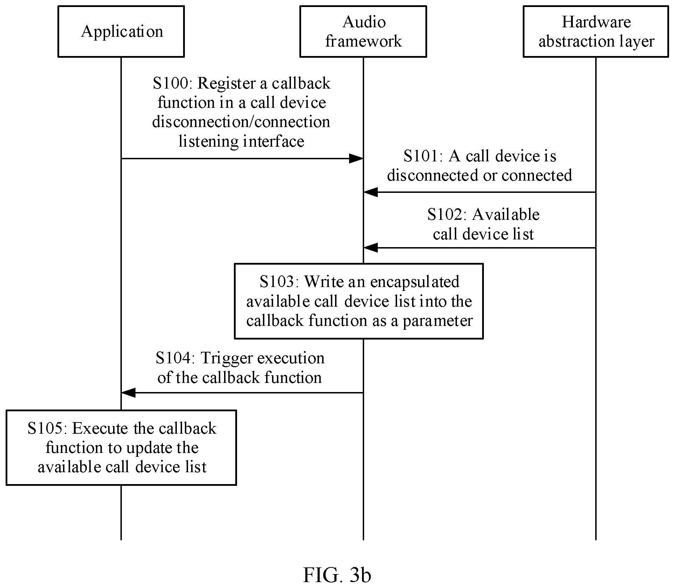

For example, with reference to FIG. 3a, FIG. 3b is a diagram of an example of a processing process of an electronic device in a scenario in which a call device is disconnected or connected.

For example, as shown in FIG. 3b, the process may include the following steps.

S100: An application registers a callback function in the call device disconnection/connection listening interface.

For example, the application may invoke the call device disconnection/connection listening interface, to register the callback function for the interface.

For example, the application may be the application 1 to the application n in FIG. 3a.

For example, the application includes a MeeTime application and a control center.

S101: An HAL detects that a call device is disconnected or connected, and notifies the audio framework.

For example, when a connection between an electronic device and at least one connected call device is disconnected, and/or when the electronic device establishes a connection (a wired connection or a wireless connection, which is not limited herein) to at least one call device, the HAL may detect a disconnection/connection event (a disconnection event and/or a connection event) of the call device. The HAL may notify, through the JNI mentioned in the embodiment in FIG. 3a, the audio framework of information indicating that the call device is disconnected and/or connected.

For example, for a call device that is connected to the electronic device in a wired manner, a disconnection or connection event of the call device may occur when a connection line is inserted or removed, for example, a wired earphone is inserted or removed.

For example, for a call device that is connected to the electronic device in a wireless connection manner (for example, Bluetooth), if the wireless connection is disconnected, a disconnection event of the call device may occur. If the wireless connection is established, a connection event of the call device may occur.

A specific manner in which a communication connection between the call device and the electronic device is connected or disconnected is not limited in this application. However, as long as at least one call device is connected to or disconnected from the electronic device, execution of S101 is triggered.

S102: When detecting that the call device is disconnected or connected, the audio framework obtains an available call device list.

For example, the audio framework may learn, by listening to a change of a device at the HAL layer, that the available call device list changes.

In this case, the audio framework may invoke the query interface 1 to obtain the available call device list from the HAL.

For example, the audio framework may invoke the query interface to query from the HAL (for example, query from the HAL through the JNI) for device attribute information of all Bluetooth devices or non-Bluetooth devices that can be used for a call. Then, the audio framework may encapsulate the device attribute information of all the available call devices based on the foregoing unified device type.

For example, a result returned by the query interface is a list, and an element type in the list is the foregoing unified device type.

For example, after the audio framework detects, through listening, the connection event and/or the disconnection event that occur between the electronic device and the call device, the callback function in the call device disconnection/connection listening interface may be executed.

S103: The audio framework writes an encapsulated available call device list into the callback function as a parameter.

S104: The audio framework triggers execution of the callback function.

S105: The application executes the callback function, to update the available call device list.

For example, after obtaining a latest available call device list, the audio framework may use the list as an input parameter of the callback function registered by the application, and trigger callback. Therefore, the application may obtain the latest call device list.

The audio framework provides the call device disconnection/connection listening interface for the application. The application can register the callback function for the interface. When the audio framework detects that the call device list changes, the audio framework can query the available call device list through the query interface 1, write, as the parameter, the list into the callback function registered by the application, and trigger execution of the callback function. This implements a function of the call device disconnection/connection listening interface.

It should be understood that the query interface that is provided by the audio framework and that is used to query all available call devices is not limited to being invoked by only the call device disconnection/connection listening interface. In other words, the audio framework obtains all available call device lists not only in a scenario in which the call device is disconnected or connected. For example, the audio framework and/or the application may also invoke the query interface 1, to obtain all the available call device lists.

For example, the available call device list may include device attribute information of all latest available call devices after the foregoing event of connecting to and/or disconnecting from the call device occurs.

For example, the available call device list may include device attribute information of a Bluetooth call device and/or device attribute information of a non-Bluetooth call device.

For example, each call device in the encapsulated available call device list may include information about a device type number, a device address, and a device name, and an interface used to set and obtain the foregoing information.

In a possible implementation, after detecting that the device is disconnected, the audio framework actively obtains a latest available call device list through the query interface 1, and returns the latest device list to the application in a form of an input parameter of the callback function. For example, the application may refresh, based on the latest available call device list, the available call device list in the application by executing the callback function.

In a possible implementation, after detecting, through listening, that the device is disconnected, the audio framework notifies the application by using the callback function, and the application actively invokes the query interface 1 to obtain the latest available call device list.

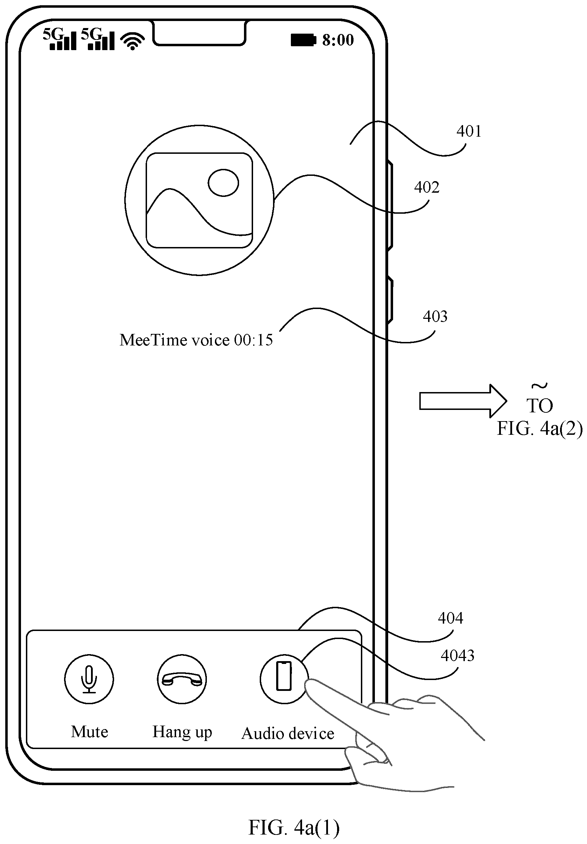

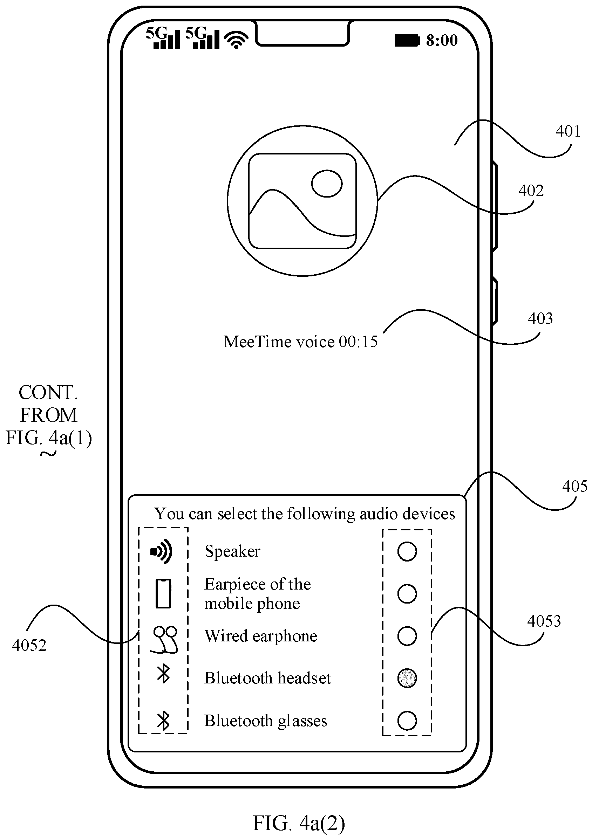

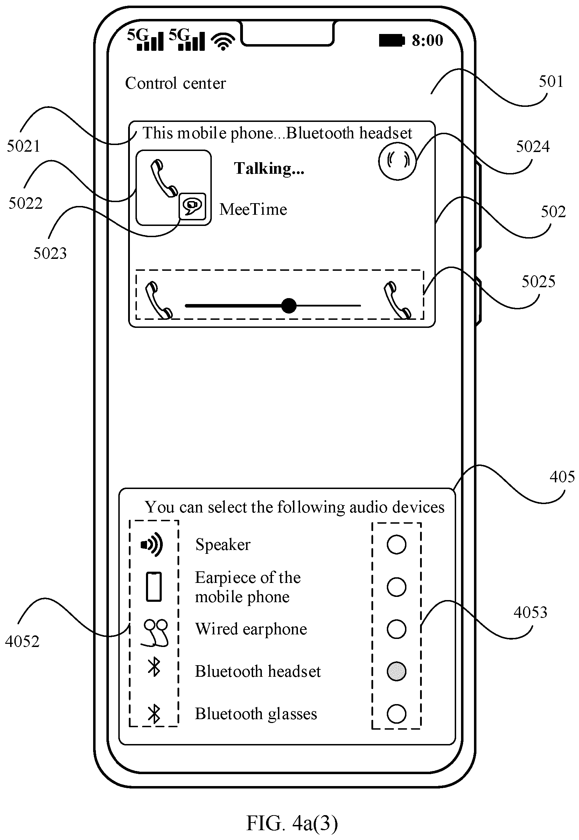

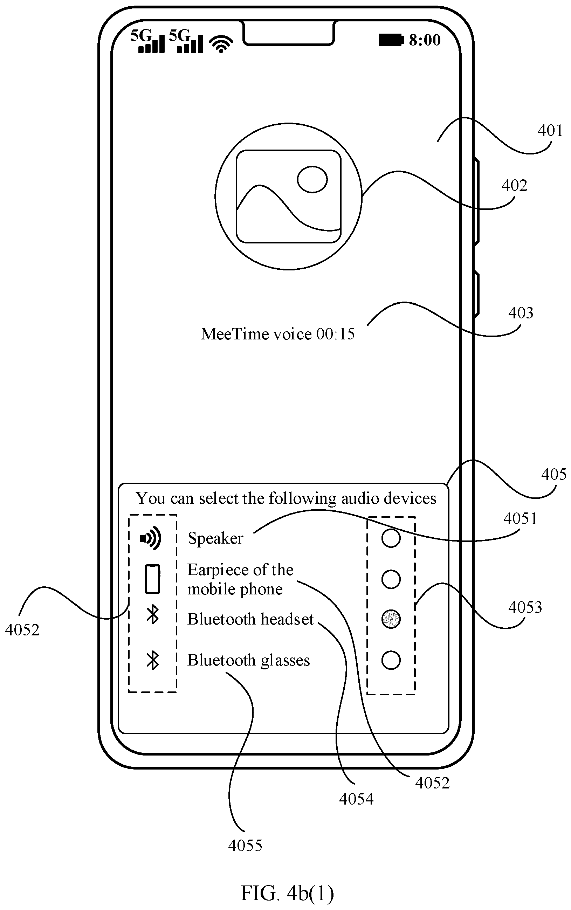

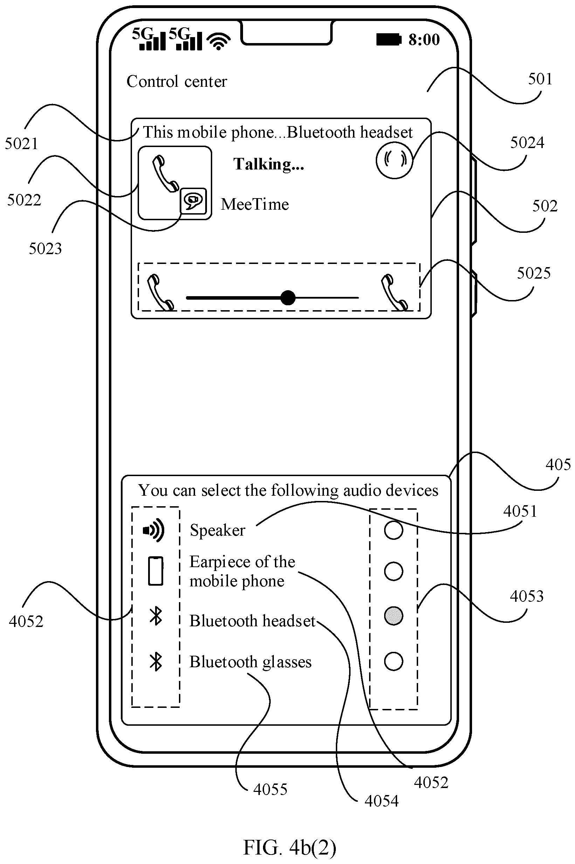

The following describes the application scenario in FIG. 3a with reference to FIG. 4a(1) to FIG. 4a(3), and FIG. 4b(1) and FIG. 4b(2).

For example, as shown in FIG. 4a(1), a mobile phone performs a voice call by using a MeeTime application.

For example, both the MeeTime application and a control center register the call device disconnection/connection listening interface and the call device change listening interface.

For example, as shown in FIG. 4a(1), a display interface of the mobile phone is an application interface 401 of the MeeTime application.

For example, as shown in FIG. 4a(1), the application interface 401 may include a plurality of controls. The controls may include but are not limited to a control 402 used to indicate a profile picture, a control 403 used to indicate current call duration, a control 404, and the like.

For example, the control 404 may include but is not limited to a mute control, a hang-up control used to hang up a current voice call, and a control 4043 used to display an audio device list.

For example, a user taps the control 4043 shown in FIG. 4a(1), and the mobile phone may switch, in response to the user operation, display content of the application interface 401 to display content of the application interface 401 shown in FIG. 4a(2).

For example, as shown in FIG. 4a(2), the application interface 401 may include but is not limited to a control 405.

For example, information about an available call device list is displayed on the control 405.

For example, the control 405 may include device names of available call devices, which are sequentially a speaker, an earpiece of the mobile phone, a wired earphone, a Bluetooth headset, and Bluetooth glasses from top to bottom.

For example, the control 405 may further include a control 4052 shown by a dashed box. For example, icons in the control 4052 respectively represent icons of the available call devices sorted from top to bottom.

For example, the control 405 may further include a control 4053 shown by a dashed box. For example, controls in the control 4053 respectively represent whether the available call devices sorted from top to bottom are call devices currently used by the mobile phone. For example, as shown in FIG. 4a(2), the mobile phone currently uses the Bluetooth headset to perform the voice call. Therefore, a control corresponding to the Bluetooth headset in the control 4053 is in a gray selected state, to identify that the Bluetooth headset is the call device currently used by the mobile phone.

For example, each time the mobile phone shown in FIG. 4a(1) to FIG. 4a(3) is connected to or disconnected from a call device, S101 to S105 shown in FIG. 3b may be triggered to be performed, so that the MeeTime application registering the call device disconnection/connection listening interface may obtain a latest available call device list. The MeeTime application may update the available call device list in the MeeTime application based on an encapsulated available call device list returned by the audio framework shown in FIG. 3b. In this case, in the application interface 401 of the MeeTime application shown in FIG. 4a(2), the MeeTime application may display device names of an updated available call device list in the control 405.

For example, in the encapsulated available call device list obtained by the MeeTime application from the audio framework, information about each call device is a unified device type. The unified device type may include a device name, and in this case, the MeeTime application may display device names of call devices in the available call device list in the control 405 shown in FIG. 4a(2).

For example, before an audio or video call is connected, the MeeTime application may obtain the updated available call device list when the mobile phone is disconnected from or connected to the call device, so that after the audio or video call is connected, information about the updated call device is displayed in the available call device list, to ensure that a call device in the available call device list displayed in a call interface of the MeeTime application is effective.

For example, FIG. 4a(3) shows an example of an application interface 501 of the control center of the mobile phone in a scenario in which the mobile phone uses the MeeTime application to perform the voice call shown in FIG. 4a(2).

For example, as shown in FIG. 4a(3), the application interface 501 may include a plurality of controls, and the plurality of controls may include but are not limited to a call card 502 and a control 405.

For example, functions and meanings of controls in the control 405 in the application interface 501 are the same as those of the controls in the control 405 in the application interface 401 shown in FIG. 4a(2). For details, refer to related descriptions in FIG. 4a(2). Details are not described herein again.

For example, in this embodiment of this application, the control center may also register a callback function for the call device disconnection/connection listening interface. In this case, each time the mobile phone shown in FIG. 4a(1) to FIG. 4a(3) is connected to or disconnected from a call device, S101 to S105 shown in FIG. 3b may be triggered to be performed. In this way, the control center that registers the callback function for the call device disconnection/connection listening interface can also obtain the latest available call device list. The control center may update, by executing the callback function, an available call device list in the control center based on the encapsulated available call device list returned by the audio framework shown in FIG. 3b in the parameter of the callback function. In this case, in the application interface 501 of the control center shown in FIG. 4a(3), the control center may display device names of an updated available call device list in the control 405.

By comparing the controls 405 shown in FIG. 4a(2) and FIG. 4a(3) respectively, it can be learned that, based on that both the control center and the MeeTime application register the callback function of the call device disconnection/connection listening interface provided by the audio framework, information about the available call device list shown by the control 405 in the application interface 501 of the control center is the same as information about the available call device list shown by the control 405 in the application interface 401 of the MeeTime application. As shown in FIG. 4a(2) and FIG. 4a(3), the device names in the available call device list in the control 405 are sequentially the speaker, the earpiece of the mobile phone, the wired earphone, the Bluetooth headset, and the Bluetooth glasses from top to bottom.

For example, as shown in FIG. 4a(3), the application interface 501 may include the call card 502.

For example, the call card may include but is not limited to a control 5021, a control 5022, a control 5023, and a control 5024.

For example, the control 5021 may be used to display information about a call device currently used by the mobile phone, for example, "The mobile phone... Bluetooth headset" herein.

For example, the control 5022 may indicate a call icon, and the control 5022 may include the control 5023.

For example, the control 5023 may be an icon of a call application currently used by the mobile phone for a call, and is an application icon of the MeeTime application herein.

For example, a control 5025 may be a control used to adjust call volume.

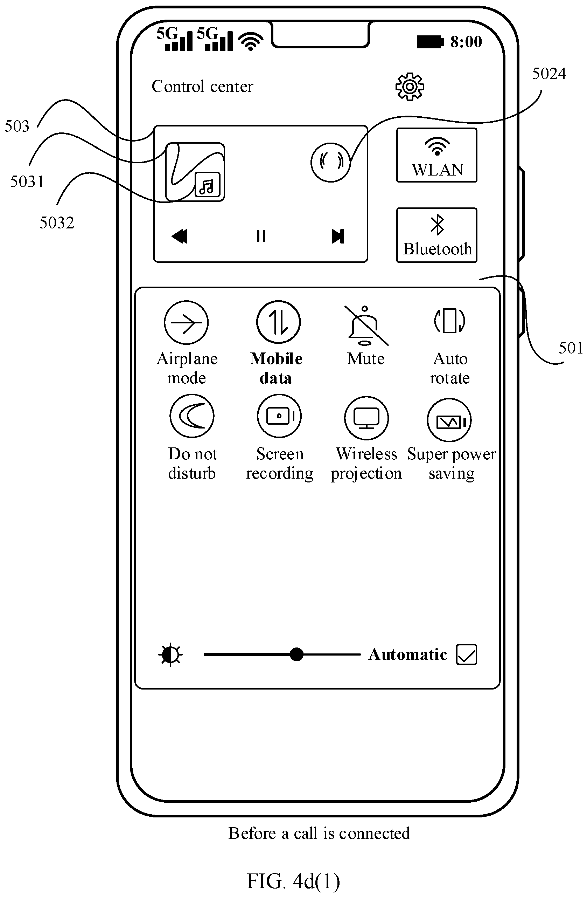

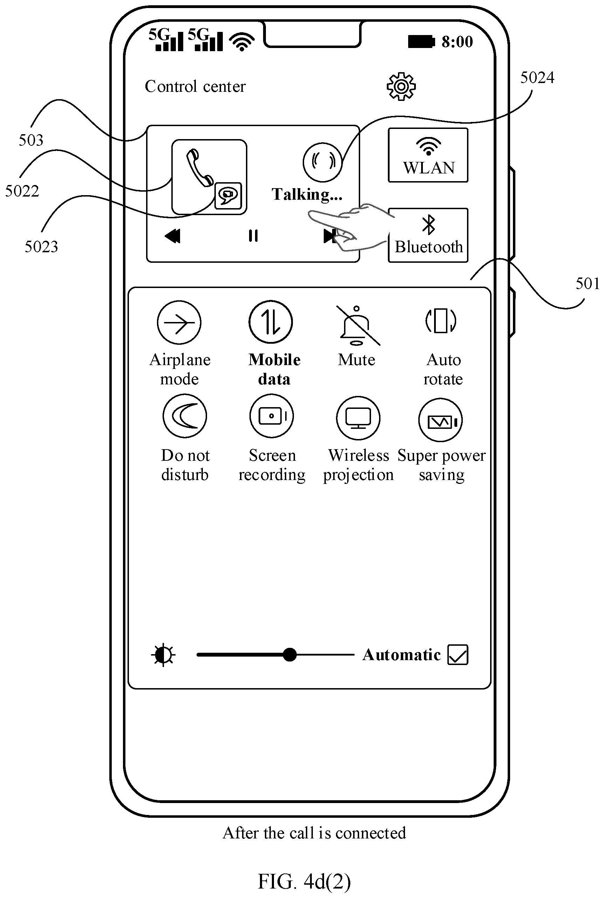

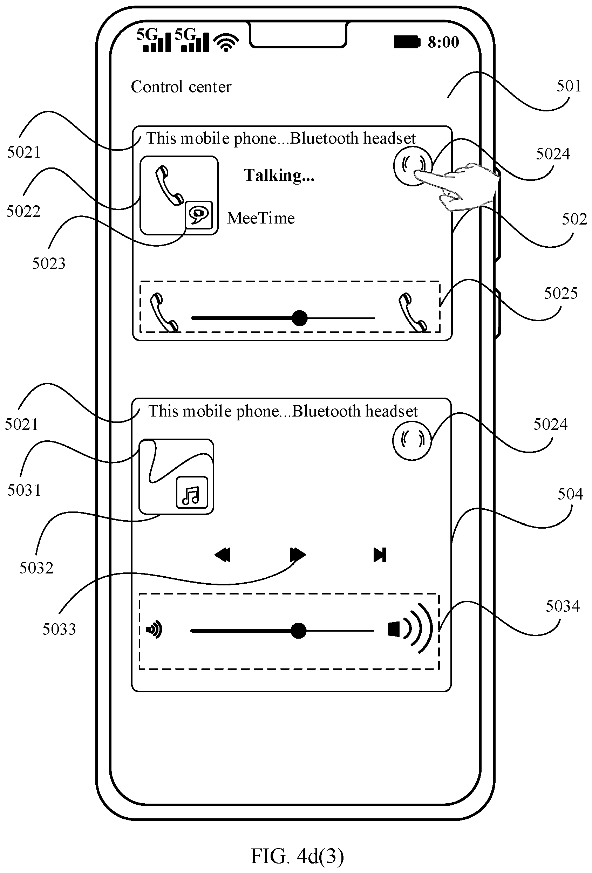

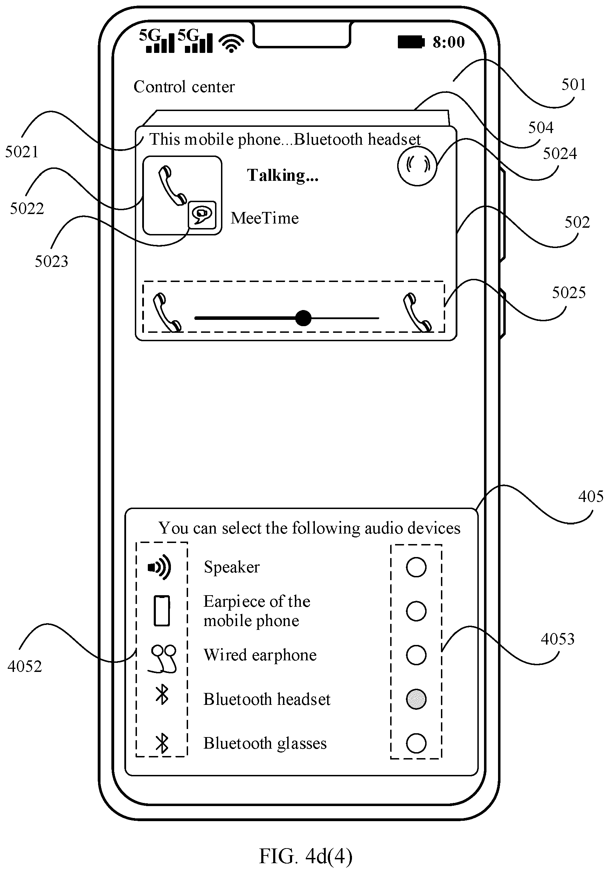

For example, for a function of the control 5024, refer to related descriptions in FIG. 4d(1) to FIG. 4d(4). Details are not described herein.

In a possible implementation, in the call scenario shown in FIG. 4a(1) to FIG. 4a(3), the wired earphone is removed from the mobile phone, so that the wired earphone is disconnected from the mobile phone. In this case, after a disconnection event of the wired earphone occurs, execution of S101 to S105 shown in FIG. 3b may be triggered. Therefore, both the MeeTime application and the control center that register the callback function of the call device disconnection/connection listening interface can obtain the latest available call device list. The MeeTime application and the control center may update available call device lists displayed in respective application interfaces based on the encapsulated available call device list returned by the audio framework shown in FIG. 3b.

For example, for the MeeTime application, after the wired earphone is removed and disconnected from the mobile phone, the application interface of the MeeTime application may be switched from the application interface 401 shown in FIG. 4a(2) to an application interface 401 shown in FIG. 4b(1).

For example, in the application interface 401 shown in FIG. 4b(1), device names in an available call device list displayed by the control 405 in the application interface 401 no longer include the "Wired earphone" in the control 405 shown in FIG. 4a(2).

For example, for the control center, after the wired earphone is removed and disconnected from the mobile phone, the application interface of the control center may be switched from the application interface 501 shown in FIG. 4a(3) to an application interface 501 shown in FIG. 4b(2).

For example, in the application interface 501 shown in FIG. 4b(2), device names in an available call device list displayed by the control 405 in the application interface 501 no longer include the "Wired earphone" in the control 405 shown in FIG. 4a(3).

In this way, the MeeTime application and the control center register the callback function for the call device disconnection/connection listening interface provided by a system. Therefore, when the call device of the mobile phone is disconnected and/or connected, the MeeTime application and the control center can obtain a latest available call device list in time through the system, to ensure that a call device list in the application (for example, a call device list displayed in an application interface of a call application or the call device list displayed in the control center) is an effective and available call device, and the information is correct and can be consistent with information about an actually available call device of the electronic device.

In this way, in a scenario in which a plurality of applications register the call device disconnection/connection listening interface, the plurality of applications can keep synchronization and accuracy of call device lists in the applications in real time.

### Example 2

The Example 2 focuses on an implementation process of the call device change listening interface.

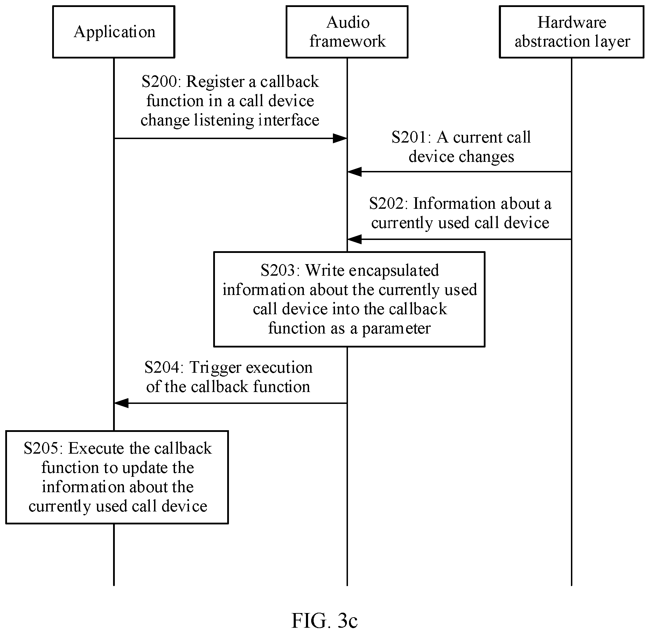

For example, with reference to FIG. 3a, FIG. 3c is a diagram of an example of a processing process of an electronic device in a scenario in which a call device changes.

For example, as shown in FIG. 3b, the process may include the following steps.

S200: An application registers a callback function in the call device change listening interface of the audio framework.

For example, the application may be the application 1 to the application n in FIG. 3a.

For example, the application includes a MeeTime application and a control center.

S201: An HAL detects that a current call device changes, and notifies the audio framework.

For example, when the HAL detects that a currently used call device in a call device connected to the electronic device changes, for example, the electronic device switches from using the wired earphone shown in FIG. 3a to using the Bluetooth device 1 to perform a call, the HAL may detect an event indicating that the current call device changes, and the HAL may notify, through the JNI mentioned in the embodiment in FIG. 3a, the audio framework of information indicating that the current call device changes.

For example, a scenario in which the call device currently used by the electronic device changes may include but is not limited to at least one of the following.

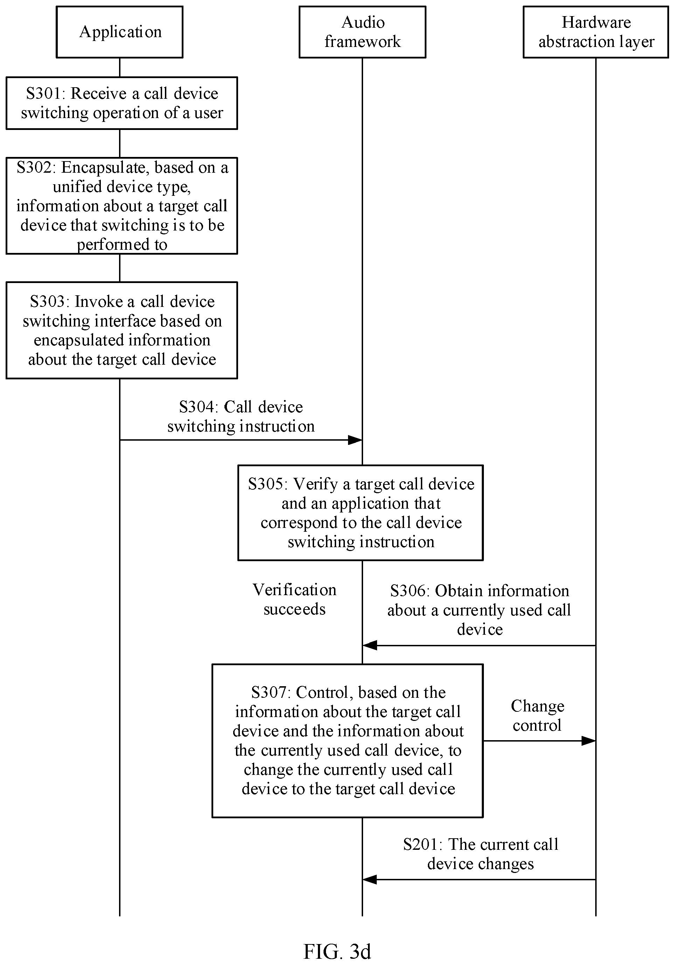

The electronic device receives an operation that is actively triggered by a user in the application shown in FIG. 3c and that indicates to switch the current call device, so that the electronic device changes the currently used call device by using a procedure in FIG. 3d, thereby triggering the event indicating that the currently used call device changes.

The call device currently used by the electronic device is disconnected from the electronic device, and accordingly a system of the electronic device automatically reselects a call device, so that the audio framework invokes the call device switching interface to trigger the procedure in FIG. 3d, to change the currently used call device, so as to trigger the event indicating that the currently used call device changes.

It should be understood that an application scenario in which the call device currently used by the electronic device changes is not limited in this application. As long as the call device currently used by the electronic device (for example, a voice call or a video call) changes, the HAL may detect the corresponding current call device change event, thereby triggering execution of S201.

S202: When detecting that the call device changes, the audio framework may obtain, from the HAL, information about the currently used call device.

For example, the audio framework may learn, by listening to a change of a device at the HAL layer, that the currently used call device changes.

In this case, the audio framework may invoke the query interface 2 to obtain the currently used call device from the HAL.

For example, after the audio framework detects, through listening, the event that the call device currently used by the electronic device (that is, currently used for a call) changes, the callback function registered with the call device change listening interface may be executed.

S203: The audio framework writes encapsulated information about the currently used call device into the callback function as a parameter.

S204: The audio framework triggers execution of the callback function.

S205: The application executes the callback function, to update the information about the currently used call device.

For example, after obtaining information about a latest currently used call device, the audio framework may use the information as an input parameter of the callback function registered by the application, and trigger execution of the callback function. Therefore, the application may obtain the information about the latest currently used call device.

The audio framework provides the call device change listening interface for the application. The application can register the callback function for the call device change listening interface. When the audio framework detects that the current call device changes, the audio framework can query, through the query interface 2, an information table of a changed currently used call device, write the information table as a parameter into the callback function registered by the application with the call device change listening interface, and trigger execution of the callback function. This implements a function of the call device change listening interface.

For example, after the currently used call device is changed, the audio framework invokes the current call device query interface, and may query (for example, query from the HAL through the JNI) device attribute information of the call device currently used by the electronic device (namely, the changed currently used call device) from the HAL, and encapsulate the device attribute information of the currently used call device based on the unified device type.

For example, the current call device query interface may be an interface provided by an Android open source project (Android Open Source Project, AOSP).

For example, a result returned by the current call device query interface may be encapsulated based on the unified device type.

For example, the currently used call device obtained by the audio framework may be a Bluetooth call device or a non-Bluetooth call device. This is not limited herein.

For example, the encapsulated information about the currently used call device may include information about a device type number, a device address, and a device name, and an interface used to set and obtain the foregoing information.

In a possible implementation, after detecting that the currently used call device changes, the audio framework actively obtains a latest changed currently used call device through the query interface 2, and returns the information about the changed currently used call device to the application in a form of an input parameter of the callback function. For example, the application may refresh, based on the information table of the latest changed currently used call device, the information about the currently used call device in the application by executing the callback function.

In a possible implementation, after detecting, through listening, that the currently used call device changes, the audio framework may notify the application by using the callback function registered in S200, and the application actively invokes the query interface 2 to obtain the information about the latest changed currently used call device.

The following describes the application scenario in FIG. 3c with reference to FIG. 4a(1) to FIG. 4a(3).

For example, as shown in FIG. 4a(2), the mobile phone performs a voice call by using a MeeTime application.

For example, both the MeeTime application and a control center register the call device disconnection/connection listening interface and the call device change listening interface.

For example, as shown in FIG. 4a(2), the mobile phone currently uses a Bluetooth headset to perform a voice call. Therefore, a control corresponding to the Bluetooth headset in the control 4053 is in a gray selected state, to identify that the Bluetooth headset is a call device currently used by the mobile phone.

For example, in a process in which the mobile phone shown in FIG. 4a(1) to FIG. 4a(3) performs a call by using the MeeTime application, after detecting that the call device currently used by the mobile phone changes, for example, changes to a Bluetooth headset herein, S201 to S205 shown in FIG. 3c may be triggered to be performed, and therefore, the MeeTime application registered with the call device change listening interface may obtain information about the currently changed used call device. The MeeTime application may update, based on encapsulated information that is about the currently used call device and that is returned by the audio framework shown in FIG. 3c, the information about the currently used call device in the MeeTime application. In this case, in an application interface 401 of the MeeTime application shown in FIG. 4a(2), the MeeTime application may set a color of the control 4053 corresponding to the Bluetooth headset in an available call device list in the control 405 to gray, to identify the Bluetooth headset as a call device being used in a MeeTime voice call.

For example, in this embodiment of this application, the control center may also register the callback function for the call device change listening interface. In a process in which the mobile phone shown in FIG. 4a(1) to FIG. 4a(3) performs a call by using the MeeTime application, after detecting that a call device currently used by the mobile phone changes, for example, changes to a Bluetooth headset herein, S201 to S205 shown in FIG. 3c may be triggered to be performed, so that the control center that registers the callback function for the call device change listening interface may also obtain information about a currently changed used call device (herein, information about the Bluetooth headset). The control center may update the information about the currently used call device in the control center by executing the callback function based on the encapsulated information about the currently used call device that is returned by the audio framework shown in FIG. 3c in the parameter of the callback function. In this case, in an application interface 501 of the MeeTime application shown in FIG. 4a(3), the control center may set a color of the control 4053 corresponding to the Bluetooth headset in the available call device list in the control 405 to gray, to identify the Bluetooth headset as a call device being used in a MeeTime voice call.

In this way, the application registers the callback function in the call device change listening interface provided by a system. Therefore, when the call device being used by the electronic device changes, both an application being used for a call and the control center can obtain, in a timely manner by using the system, the currently changed used call device, so as to ensure that information about the currently used call device displayed in an application interface of a call application and information about the currently used call device displayed in the control center are effective and accurate call devices, and the information can be consistent with information about a call device actually currently used by the electronic device.

### Example 3

The Example 3 focuses on an implementation process of the call device switching interface.

For example, with reference to FIG. 3a and FIG. 3c, FIG. 3d is a diagram of an example of a processing process of an electronic device in a call device switching scenario.

For example, the call device switching interface may be configured to generate a switching instruction based on information, in the interface, about a target call device to be changed to, to indicate the audio framework to change a currently used call device to the target call device.

For example, the information about the target call device within the call device switching is the unified device type.

For example, the audio framework may change the currently used call device to the target call device by using the HAL, to trigger the change event of the currently used call device mentioned above.

For example, after the call device switching interface is invoked by the invoker, a change of the currently used call device may be triggered, and information about a changed currently used call device may be synchronously updated to a call application and a control center that register the call device change listening interface.

For example, as shown in FIG. 3d, the process may include the following steps.

S301: An application receives a call device switching operation of a user.

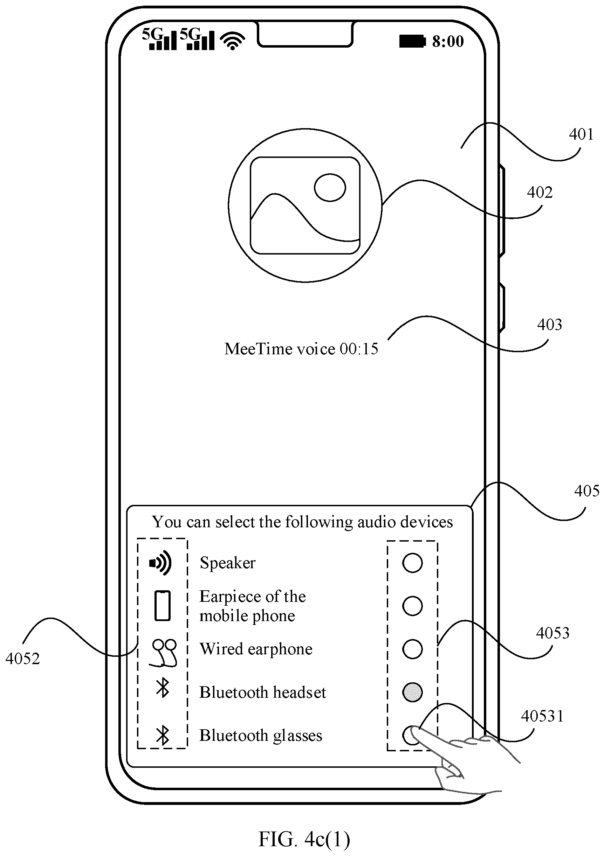

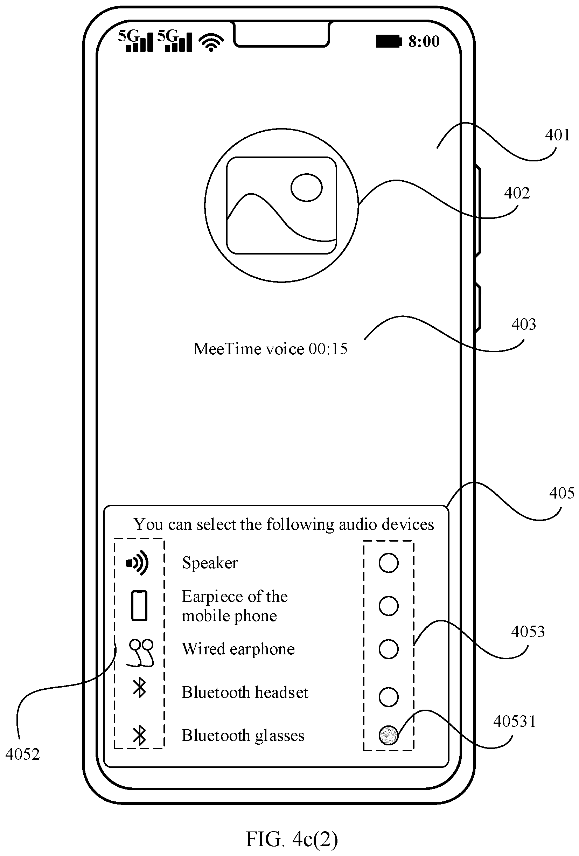

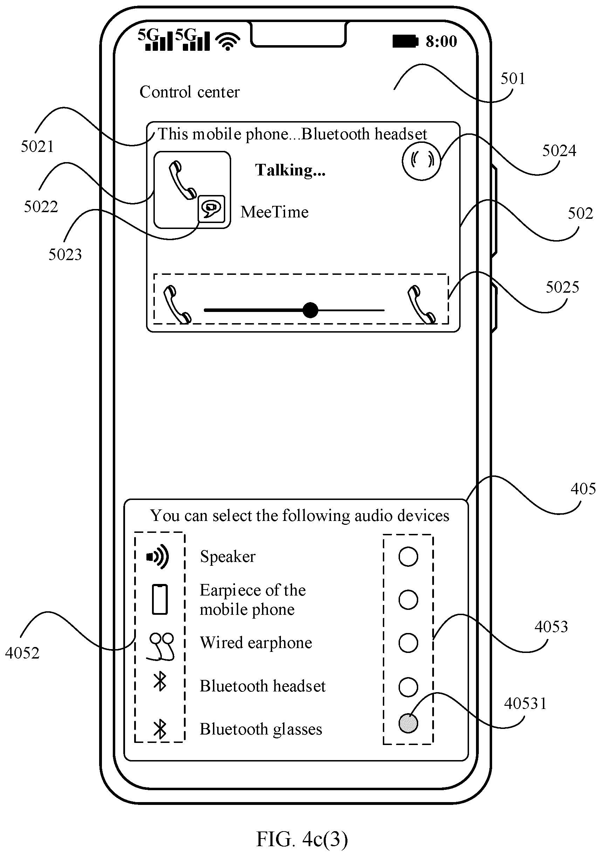

For example, application scenarios of switching and changing the currently used call device are described herein with reference to FIG. 4a(1) to FIG. 4a(3) and FIG. 4c(1) to FIG. 4c(3).

For example, as shown in FIG. 4a(2) and FIG. 4a(3), the MeeTime application and the control center may separately display the control 405 in respective application interfaces. The user may tap a control corresponding to a call device in the control 4053 in the control 405 in the control center or the MeeTime application as required, to trigger a call device switching operation.

For example, the call device corresponding to the tapped control needs to be different from a call device (a Bluetooth headset herein) currently used by the MeeTime application.

For example, as shown in FIG. 4c(1), the user taps a control 40531 corresponding to Bluetooth glasses in an application interface 401 of the MeeTime application, to request to switch a call device currently used by a MeeTime voice from the Bluetooth headset to the Bluetooth glasses.

For example, as shown in FIG. 4c(2), the MeeTime application may set a color of a control corresponding to the Bluetooth headset in the control 4053 to white, and set a color of the control 40531 corresponding to the Bluetooth glasses in the control 4053 to gray, to indicate that the currently used call device is switched from the Bluetooth headset to the Bluetooth glasses.

In some embodiments, the user may also select, in the application interface of the control center, a call device different from the currently used call device in an available call device list displayed in the application interface, to request to switch the call device. An implementation principle of a process in which the mobile phone responds to the user operation is similar to that of a response process in which the user performs a call device switching operation on a call application (herein, the MeeTime application). Details are not described herein again.

S302: The application encapsulates, based on the unified device type, information about a target call device that switching is to be performed to.

For example, the application is the MeeTime application. When obtaining the available call device list by using the process in FIG. 3a, the MeeTime application has obtained information about each call device. In this case, the MeeTime application may encapsulate information about a call device corresponding to the target call device (Bluetooth glasses herein) into the unified device type.

For example, the MeeTime application obtains a unified device type object of the Bluetooth glasses based on a device type number, a device address, and a device name of Bluetooth glasses selected by the user.

S303: The application invokes the call device switching interface based on the encapsulated information about the target call device.

For example, the MeeTime application may write the unified device type object of the Bluetooth glasses as a parameter into the call device switching interface, and invoke the call device switching interface provided by the audio framework, to generate a call device switching instruction.

In the embodiment in FIG. 3d, an example in which the application invokes the call device switching interface is used to describe how to implement a process of changing the call device currently used by the mobile phone. In another embodiment, the call device switching interface may also be actively invoked by the audio framework, and the audio framework selects the target call device. A specific device switching process is similar, and details are not described herein again.

S304: The application sends the call device switching instruction to the audio framework.

Optionally, in S305, the audio framework verifies a target call device and an application that correspond to the call device switching instruction.

For example, the audio framework may determine, based on the call device switching instruction, a process for invoking the call device switching interface. Herein, this is a process of the MeeTime application.

For example, the audio framework may verify whether the process that invokes the call device switching has a permission to modify the call device (the permission may be set by the system or the user, and is not limited herein).

For example, if the process has the permission to modify the call device, the audio framework determines that verification of an application corresponding to the process succeeds. If the process has no permission to modify the call device, the verification fails.

For example, the audio framework may further verify, based on information about the target call device transferred to the call device switching interface, whether the target call device is an effective call device (also referred to as an available call device).

For example, if the target call device is the effective call device, the audio framework determines that the target call device is successfully verified. If the target call device is not the effective call device, the verification fails.

For example, when the audio framework determines that verification on both the application and the target call device succeeds, S306 is performed.

For example, when the audio framework determines that the verification on either of the application and the target call device fails, the audio framework stops the switching procedure, and outputs error prompt information to the application (herein, the MeeTime application).

For example, although the MeeTime application may obtain the available call device list by using the process in FIG. 3b, in consideration of reliability, to avoid a difference between the available call device list sent by the audio framework to the MeeTime application and a target call device delivered when the MeeTime application invokes the call device switching interface, the audio framework may verify the target call device delivered by the MeeTime application, to determine whether the target call device is an available call device.

For example, after verification on both the target call device and an application requesting call device switching succeeds, in S306, the audio framework obtains the information about the currently used call device from the HAL.

For example, the audio framework may invoke a query interface of the current call device provided by the AOSP, to obtain, from the HAL, the information about the call device currently used by the mobile phone for the call, where the information about the call device may be information encapsulated according to the unified device type.

S307: The audio framework controls, by using the HAL and based on the information about the target call device and the information about the currently used call device, to change the currently used call device to the target call device.

For example, the unified device type described above may include a device type number, and the audio framework may distinguish between a Bluetooth device and a non-Bluetooth device based on the device type number.

For example, the audio framework may determine, based on the device type number of the target call device, whether the target call device belongs to a Bluetooth device (which may also be referred to as a Bluetooth call device herein) or a non-Bluetooth device (which may also be referred to as a non-Bluetooth call device herein).

Similarly, the audio framework may determine, based on the device type number that is of the currently used call device (which may also be referred to as a call device before switching herein) and that is obtained from the HAL, that the currently used call device belongs to a Bluetooth device (which may also be referred to as a Bluetooth call device herein), or a non-Bluetooth device (which may also be referred to as a non-Bluetooth call device herein).

For example, the audio framework may determine a switching policy of the call device based on the call device before switching and a device type of the target call device that switching is to be performed to.

In a possible implementation, if the target call device is a non-Bluetooth device (for example, a wired earphone), when the currently used call device is switched to the non-Bluetooth call device, the audio framework may set the target call device as a preferred device with a highest priority in the call policy. In this way, when the audio framework controls the HAL to perform device switching, the HAL may switch the currently used call device to the target call device with the highest priority according to the call policy.

The call policy is not limited herein. For example, the target call device may be set by the audio framework as the call device with the highest priority in the available call device list.

For example, in this implementation, if the call device before switching is a Bluetooth device (for example, a Bluetooth headset), when the audio framework controls call device switching by using the HAL, refer to FIG. 3a. The audio framework may notify a Bluetooth module in the HAL to disconnect an SCO channel of the Bluetooth device (for example, a Bluetooth device 1, and an example of the Bluetooth device 1 is a Bluetooth headset). In this way, the Bluetooth headset cannot perform a call through the SCO channel of the Bluetooth headset.

In this implementation, the user may switch, based on a requirement, the call device used in the current call to any call device in the displayed available call device list in the application interface of the call application or the application interface of the control center. In this example, switching from a Bluetooth call device or a non-Bluetooth call device to a non-Bluetooth call device may be implemented to perform a call.

In another possible implementation, if the target call device is a Bluetooth device (for example, the Bluetooth glasses shown in FIG. 4c(2)), and the call device before switching is also a Bluetooth device (for example, the Bluetooth headset shown in FIG. 4c(1)), refer to FIG. 3a. The audio framework may first indicate the Bluetooth module to disconnect an SCO channel of the Bluetooth headset (for example, the Bluetooth device 1), and activate Bluetooth glasses (for example, the Bluetooth device 2) that switching is currently performed to. After the Bluetooth glasses are activated, the audio framework indicates the Bluetooth module to establish an SCO channel of the Bluetooth glasses. Finally, the audio framework indicates the Bluetooth module to switch a call audio to the SCO channel of the Bluetooth glasses, to complete a change of the call device being used by the MeeTime application.

In this implementation, the user may switch, based on a requirement, the call device used in the current call to any call device in the displayed available call device list in the application interface of the call application or the application interface of the control center. In this example, switching from a Bluetooth call device to another Bluetooth call device may be implemented to perform a call.

In another possible implementation, the target call device is a Bluetooth device (for example, Bluetooth glasses shown in FIG. 4c(2)), but the call device before switching is a non-Bluetooth device (for example, a wired earphone shown in FIG. 4c(1)), refer to FIG. 3a. The audio framework may indicate the Bluetooth module to activate the Bluetooth glasses (for example, the Bluetooth device 2) that switching is to be currently performed to, and indicates the Bluetooth module to establish an SCO channel of the Bluetooth glasses. Finally, the audio framework indicates the Bluetooth module to switch a call audio to the SCO channel of the Bluetooth glasses, and connects the call audio to the SCO call of the Bluetooth glasses, to complete a change of a call device that is being used by the MeeTime application.

In this implementation, the user may switch, based on a requirement, the call device used in the current call to any call device in the displayed available call device list in the application interface of the call application or the application interface of the control center. In this example, switching from a non-Bluetooth call device to a Bluetooth call device may be implemented to perform a call.

After S307, if the call device currently used by the electronic device has changed to the target call device, the HAL may detect a current call change event, to trigger execution of steps S201 to S205 shown in FIG. 3c. In this way, as shown in FIG. 4c(3), the control center with which the call device change interface is registered may obtain information about a changed currently used call device, where the information is information about the Bluetooth glasses herein. In this way, the control center may display the application interface 501 shown in FIG. 4c(3). In the available call device list displayed in the control 405, a color of the control 40531 is set to gray, to identify corresponding Bluetooth glasses as a call device currently used by the mobile phone.

For example, after the user performs an operation on the control 40531 shown in FIG. 4c(1) to trigger an operation of switching the currently used call device, the MeeTime application may change the identified currently used call device in the available call device list, for example, switching from the Bluetooth headset to the Bluetooth glasses. In addition, the application interface of the control center may be automatically updated from FIG. 4a(3) to the application interface 501 shown in FIG. 4c(3). Information used to identify the currently used call device in the control 405 in the application interface 501 changes, for example, switching from the Bluetooth headset to the Bluetooth glasses.

In a possible implementation, after the user manually switches the currently used call device by using the process in FIG. 4c(1) to FIG. 4c(3), and after the call of the mobile phone ends, the audio framework may clear information about the target call device (for example, the Bluetooth glasses that manual switching is performed to in FIG. 4c(1) to FIG. 4c(3)) to which the user manually switches during the current call. For example, device priority information under a call policy set by using the audio framework may be cleared, so as to avoid affecting selection of a default device when a next call is started.

For example, the user operates the MeeTime application, and invokes, in an application interface of the MeeTime application, a hang-up control shown in FIG. 4a(1). When the user taps the hang-up control, the call of the mobile phone ends.

In this embodiment, for a call application and a control center that have registered monitoring callback, after the currently used call device is switched in the call application, the application interface in the control center may synchronously switch the displayed currently used call device. Similarly, after the currently used call device is switched in the control center, the displayed currently used call device may be synchronously switched in the application interface in the call application. A switching result of the currently used call device can be synchronized between the call application and the control center. For example, in a VoIP scenario, in this application, in a call process, the currently used call device may be switched between any two available call devices without operating a disconnected device on a system setting interface.

### Example 4

For example, the control center in this application may not only provide a media (for example, music and a video) play control function, but also implement a call play control function, and separately manage a voice call and media tone play by using different play control cards, so that the user can switch, in the control center, the call device currently used by the mobile phone.

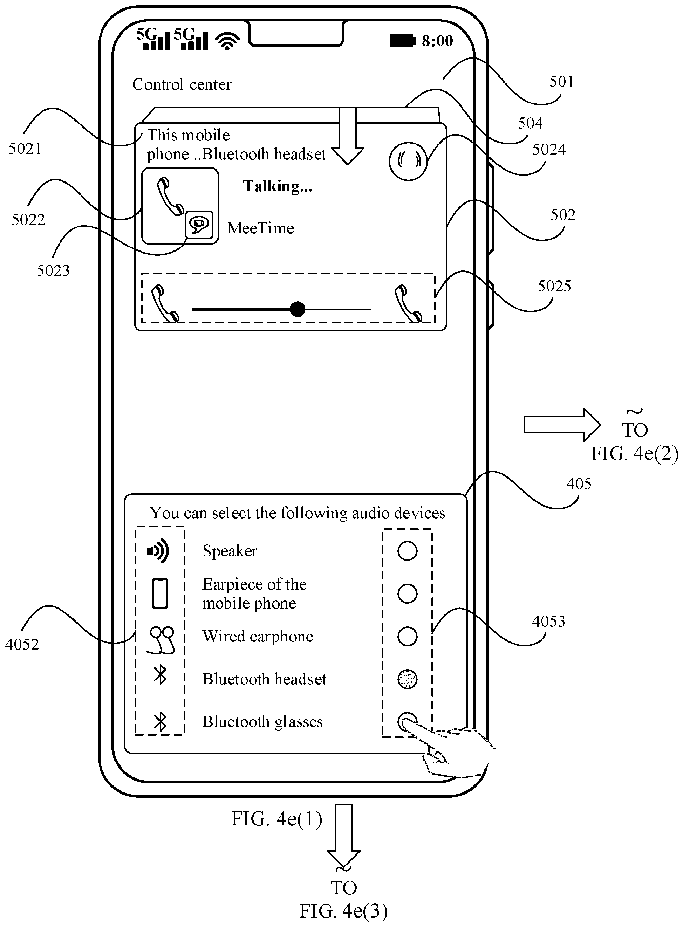

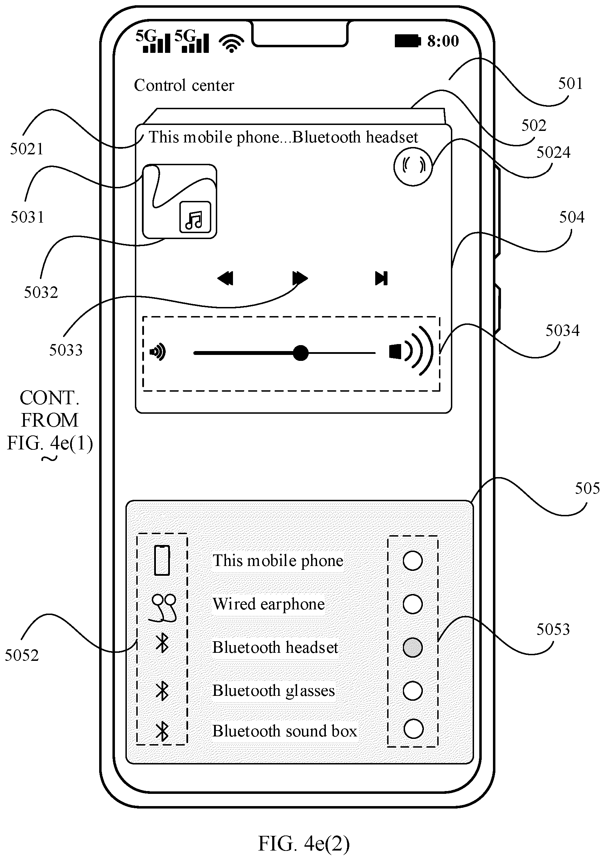

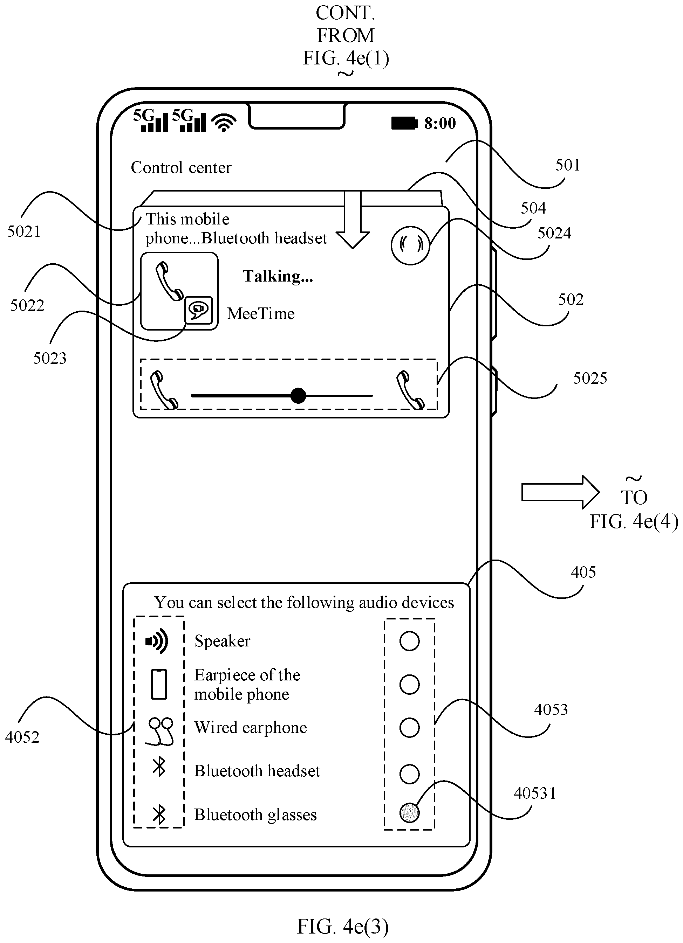

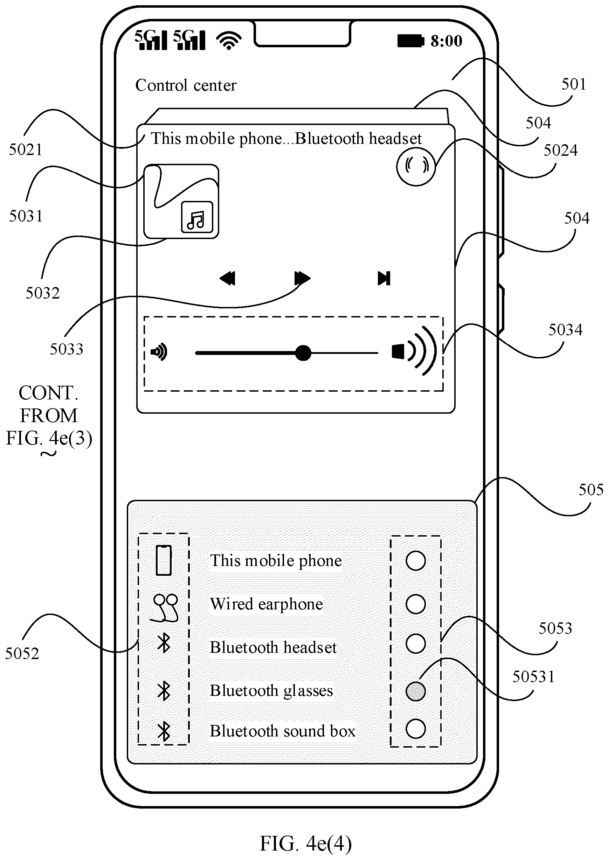

The following describes an application scenario of the control center with reference to FIG. 4d(1) to FIG. 4d(4) and FIG. 4e(1) to FIG. 4e(4).

For example, as shown in FIG. 4d(1), the mobile phone displays an application interface 501 of the control center. The application interface 501 includes a plurality of controls. For example, the plurality of controls may include but are not limited to a control 503. For example, the control 503 may be a media play card of the mobile phone.

For example, the control 503 may include one or more controls, and the control 503 may include a control 5031, a control 5032, and a control 5024.

For example, as shown in FIG. 4d(1), the mobile phone is currently playing music by using a music application. In this case, the control 5031 may be a poster image of a currently played music, and the control 5032 may be an application icon of the music application.

For example, a function of the control 5024 shown in FIG. 4d(1) is similar to that of the control 5024 shown in FIG. 4d(2), and the control 5024 may be configured to open a device switching interface of a corresponding play card. Details are described below.

For example, as shown in FIG. 4d(1), before the mobile phone performs an audio call, the mobile phone is playing music. In this case, after the mobile phone answers a call, for example, by using the MeeTime application, the audio call is connected, the application interface that is of the control center and that is displayed by the mobile phone may be switched from FIG. 4d(1) to the application interface 501 shown in FIG. 4d(2).

For example, playing information in the control 503 in the application interface 501 shown in FIG. 4d(2) is switched from music playing information to call information.

For example, as shown in FIG. 4d(2), the control 503 may include but is not limited to a control 5022, a control 5023, and a control 5024. For functions of the control 5022, the control 5023, and the control 5024, refer to descriptions of corresponding controls in FIG. 4a(3). Principles are similar, and details are not described herein again.

For example, as shown in FIG. 4d(2), display content of the control 503 is switched from a music play card to a call play card, and "Talking" may be displayed in the call play card to indicate that it is currently in a call state.

For example, after the audio call is connected, the user taps a blank position in the control 503 shown in FIG. 4d(2), and the mobile phone may switch the display interface from FIG. 4d(2) to FIG. 4d(3) in response to the user operation.

For example, as shown in FIG. 4d(3), the application interface 501 may include a plurality of controls. The controls may include but are not limited to a control 502 and a control 504. For example, the control 502 is a refined call play card, and the control 504 is a refined media play card.

For example, for specific functions of the plurality of controls in the control 502 in FIG. 4d(3), refer to descriptions of controls with a same mark in the foregoing described accompanying drawings. Details are not described herein again.

For example, in the control 504 shown in FIG. 4d(3), the control 504 may include a plurality of controls, and the controls may include a control 5021, a control 5031, a control 5032, a control 5033, a control 5034, and a control 5024.

For example, text content displayed on the control 5021 is "This mobile phone... Bluetooth headset", to indicate that the mobile phone is currently using the Bluetooth headset to perform audio output.

For example, the control 5034 is configured to control and adjust playing volume of a media tone, and herein is playing volume of music.

For example, the control 5033 currently indicates that the media tone (a music audio herein) is in a paused playing state.

For example, in a process in which the mobile phone plays music by using the music application, the user answers the voice call by using the MeeTime application of the mobile phone, and the mobile phone may control to pause the music playing. For example, after the voice call is connected, neither the user nor the MeeTime application sets a call device used for the current call. In this case, the audio framework may select, by default based on a device priority, the Bluetooth headset as the call device used for the current call. For example, the audio framework may invoke the call device switching interface, and use the Bluetooth headset as a target call device that switching is to be performed to, so as to use a unified device type of the Bluetooth headset as a parameter of the call device switching interface, and control the HAL to change the Bluetooth headset into the currently used call device. For a specific implementation process, refer to descriptions of corresponding steps in FIG. 3d. After the currently used call device is changed to the Bluetooth headset, refer to an implementation process in FIG. 3c. The audio framework may synchronize information about a changed currently used call device to an application (which herein includes the MeeTime application and the control center) with which the call device change listening interface is registered.

For example, if the mobile phone is connected to a plurality of Bluetooth headsets, the audio framework may preferentially select a true wireless stereo (True Wireless Stereo, TWS) as the target call device. When there are a plurality of TWSs, the audio framework may use a TVS that is most recently used as a call device as a Bluetooth headset with a highest priority, to use the TVS as the target call device.

For example, as shown in FIG. 4d(3), the user taps a control 5024 in the control 502, and the mobile phone may switch, in response to the user operation, the display interface from FIG. 4d(3) to the application interface 501 shown in FIG. 4d(4). Certainly, the user may alternatively switch, by tapping a control 5024 in FIG. 4d(2), the display interface from FIG. 4d(2) to the application interface 501 shown in FIG. 4d(4). This is not limited herein.

For example, as shown in FIG. 4d(4), the application interface 501 includes a plurality of controls, and the controls may include a control 502 and a control 504. For example, in a scenario in which the mobile phone performs an audio call, a call priority is higher than a media playing priority. In this case, the control 502 corresponding to a call card shown in FIG. 4d(4) is displayed above a control 504 corresponding to a media play card, to indicate that the mobile phone is currently in an audio or video call.

For example, as shown in FIG. 4d(4), the application interface 501 may display a control 405, to display, in the application interface of the control center, information about an available call device list corresponding to the control 502, and identify, in gray on the control 4053, a call device (a Bluetooth headset herein) that is being used.

For example, as shown in FIG. 4e(1), the user may slide downward in an arrow direction, to switch the play card displayed in the application interface 501. Certainly, the user may alternatively switch, in a direction opposite to the arrow, the play card displayed in the application interface 501 by sliding upward.

For example, the mobile phone may switch a display interface of the mobile phone from FIG. 4e(1) to FIG. 4e(2) in response to the user operation, so that the control 504 corresponding to the audio play card is displayed above the control 502.

For example, as shown in FIG. 4e(2), the application interface 501 may include a control 505, and the control 505 is list information including an available audio device (namely, a device that is connected to the mobile phone and that can be used for audio playing). For example, names of available audio devices herein are successively this mobile phone, a wired earphone, a Bluetooth headset, Bluetooth glasses, and a Bluetooth sound box.

For example, the control 505 may include a list 5052 used to indicate an icon of each available audio device, and used to indicate whether each available audio device is currently an audio device used for audio playing. Herein, the control center may obtain, based on the process in FIG. 3c, information about a currently used call device, here is the Bluetooth headset. In this case, the control center may also synchronize, as a Bluetooth headset, an audio device that is currently used and that is displayed in the control 505 corresponding to the control 504.

For example, the control 505 is shown in gray, to indicate that in a scenario in which an audio or video call is connected, that is, in a call scenario, the media tone does not support manual switching of the audio device. In other words, the user cannot operate the control 505 shown in FIG. 4e(2) to change the currently used audio device.

For example, the user taps a control corresponding to Bluetooth glasses in the control 4053 in FIG. 4e(1), to switch the currently used call device from the Bluetooth headset to the Bluetooth glasses. In this case, the mobile phone may switch the display interface from FIG. 4e(1) to the application interface 501 shown in FIG. 4e(3). In addition, the user may switch a currently displayed card by sliding down the control 502 or the control 502 in FIG. 4e(3) in an arrow direction, so that the mobile phone can switch, in response to the user operation, the display interface of the mobile phone from FIG. 4e(3) to the application interface 501 shown in FIG. 4e(4).

For example, in the application interface 501 shown in FIG. 4e(4), in an available audio device list corresponding to the audio play card (for example, the control 504), a currently selected audio device is also switched from a Bluetooth headset to Bluetooth glasses.

In this way, after the user switches the currently used call device in the call application or in the control center, a currently used audio device in an audio list displayed by the control center is also switched in real time, and the currently used audio play device is always consistent with the currently used call device. In this way, the media tone and the call voice can be output by using a same call device. For example, when an audio call is connected, if music playing is not paused, the audio call and the music may be output and played by using a same audio device.

For example, the user hangs up the call to end the audio call. For example, the user operates the MeeTime application, and invokes, in an application interface of the MeeTime application, a hang-up control shown in FIG. 4a(1). When the user taps the hang-up control, the call of the mobile phone ends. After the audio call is received, the paused audio may continue to be played. In this case, to ensure that the media tone still continues using an original audio device used before the audio call is connected to perform audio playing (for example, before the call is answered, the user plays music by using the Bluetooth headset), the audio framework may switch the currently used audio device from the Bluetooth glasses back to the Bluetooth headset.

In this embodiment of this application, the application interface of the control center may display a call play control card (for example, the control 503 and the control 502) in a call process, to support simultaneous display of the call play control card and a media play control card (for example, the control 504). In addition, an available device list correspondingly displayed on the call play control card is an available call device list (for example, the control 405 corresponding to the control 502 in FIG. 4e(1) to FIG. 4e(4)). An available device list correspondingly displayed on the media play card is an available audio device list (for example, the control 505 corresponding to the control 504 in FIG. 4e(1) to FIG. 4e(4)). In this way, the display interface of the control center may include a play control card and a device list. A device list below the call play control card displays currently available and currently used call devices. A device list below the media play control card displays currently available and currently used music playing devices. In this way, the play control card and the device list correspond to each other, and a structure is clearer, so that audios corresponding to different play control cards can be easily controlled on the different play control cards, user operations are more friendly, and use experience is improved. In addition, the media tone and the call voice of the control center are separately managed by using different cards, and a relationship between the play control card and the device list is matched, so that a real-time status of a device can be accurately presented, a structure of the control center is optimized, and user experience is improved.

It should be understood that layouts of controls in application interfaces of the control center and the call application and an interaction relationship between interfaces are not limited in this application. FIG. 4a(1) to FIG. 4e(4) are merely used to describe an implementation principle of this application, but are not used to limit this application. In addition, there may be more implementations of the application interface in this application. Details are not described herein again.

It should be understood that the implementations of the foregoing examples may be combined with each other to constitute a new implementation. The foregoing enumerated implementations are not intended to limit the technical solutions of this application.

It should be noted that same reference numerals in FIG. 4a(1) to FIG. 4e(4) represent same or similar objects. Therefore, reference numerals in the accompanying drawings are not explained one by one, and implementation functions and implementation principles of reference numerals that are not mentioned in the accompanying drawings are not described one by one, refer to explanations and descriptions of a same reference numeral mentioned in FIG. 4a(1) to FIG. 4e(4). Details are not described herein again.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation falls beyond the scope of this application.

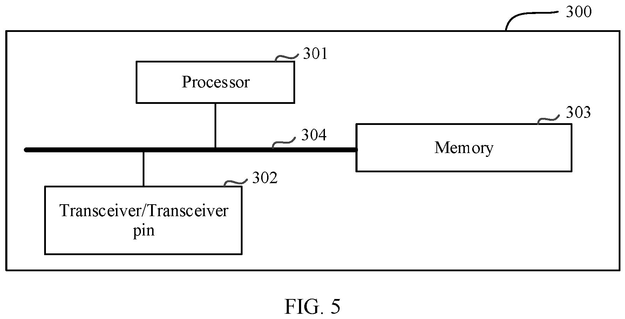

In an example, FIG. 5 is a block diagram of an apparatus 300 according to an embodiment of this application. The apparatus 300 may include a processor 301 and a transceiver/transceiver pin 302, and optionally, further include a memory 303.

Components of the apparatus 300 are coupled together through a bus 304. In addition to a data bus, the bus 304 further includes a power bus, a control bus, and a status signal bus. However, for clarity of description, various buses are referred to as the bus 304 in the figure.

Optionally, the memory 303 may be used for the instructions in the foregoing method embodiments. The processor 301 may be configured to execute the instructions in the memory 303, control a receive pin to receive a signal, and control a transmit pin to send a signal.

The apparatus 300 may be the electronic device or a chip of the electronic device in the foregoing method embodiments.

All related content of the steps in the foregoing method embodiments may be cited in function descriptions of the corresponding functional modules. Details are not described herein again.

Embodiments further provide a computer storage medium. The computer storage medium stores computer instructions. When the computer instructions are run on an electronic device, the electronic device is enabled to perform the related method steps, to implement the device management method in the foregoing embodiment.

Embodiments further provide a computer program product. When the computer program product runs on a computer, the computer is enabled to perform the foregoing related steps, to implement the device management method in the foregoing embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the device management method in the foregoing method embodiment.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on descriptions about the foregoing implementations, a person skilled in the art may understand that, for a purpose of convenient and brief description, division into the foregoing functional modules is used as an example for illustration. In actual application, the foregoing functions may be allocated to different functional modules and implemented according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

**In** addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device. Certainly, the processor and the storage medium may exist in a network device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A device management method, applied to an electronic device, wherein the electronic device is communicatively connected to at least one Bluetooth device, the at least one Bluetooth device supports an audio input function and an audio output function, and the method comprises:
displaying a first interface of a first application, wherein the first interface comprises first information, wherein
the first information comprises information that indicates a first call device of the electronic device, and the first call device comprises the at least one Bluetooth device; and
the first application is different from a system application, and the first application has the audio input function and the audio output function.

2. The method according to claim 1, wherein the method further comprises:
displaying a second interface of a second application, wherein the second interface comprises second information, wherein
the second information comprises the information that indicates the first call device; and
the second application is a system application, and the second application does not have the audio input function and the audio output function.

3. The method according to claim 1 or 2, wherein the first interface further comprises third information, the third information indicates a second call device, and the second call device is a device that is in the first call device and that is currently used for a call.

4. The method according to claim 3, wherein the second interface further comprises fourth information, and the fourth information indicates the second call device.

5. The method according to any one of claims 1 to 4, wherein after the displaying a first interface of a first application, the method further comprises:
in response to a received first user operation, switching from the call device indicated by the third information in the first interface to a third call device, and changing the device currently used for a call to the third call device, wherein
the first call device comprises the third call device; and
in response to a received second user operation, displaying the second interface, wherein switching from the call device indicated by the fourth information in the second interface to the third call device is performed.

6. The method according to any one of claims 1 to 5, wherein after the displaying a second interface, the method further comprises:
in response to a received third user operation, switching from the call device indicated by the fourth information in the second interface to a fourth call device, wherein
the first call device comprises the fourth call device; and
in response to a received fourth user operation, displaying the first interface, wherein switching from the call device indicated by the third information in the first interface to the fourth call device is performed.

7. The method according to any one of claims 1 to 6, wherein the electronic device comprises a first system interface, and the first application registers a first callback function for the first system interface; and
the displaying a first interface of a first application comprises:
when detecting that a connection to at least one fifth call device is established or disconnected, obtaining information about the first call device; and
displaying the first information in the first interface of the first application based on the information about the first call device and by using the first callback function.

8. The method according to any one of claims 1 to 7, wherein the second application registers a second callback function for the first system interface; and
the displaying a second interface of a second application comprises:
when detecting that the connection to the at least one fifth call device is established or disconnected, obtaining the information about the first call device; and
displaying the second information in the second interface of the second application based on the information about the first call device and by using the second callback function.

9. The method according to any one of claims 1 to 8, wherein the electronic device further comprises a second system interface, and the first application registers a third callback function for the second system interface; and
the displaying a first interface of a first application comprises:
when detecting that the device currently used for a call changes, obtaining information about a changed device currently used for a call; and
displaying the third information in the first interface of the first application based on the information about the changed device currently used for a call and by using the third callback function.

10. The method according to any one of claims 1 to 9, wherein the second application registers a fourth callback function for the second system interface; and
the displaying a second interface of a second application comprises:
when detecting that the device currently used for a call changes, obtaining the information about the changed device currently used for a call; and
displaying the fourth information in the second interface of the second application based on the information about the changed device currently used for a call and by using the fourth callback function.

11. The method according to any one of claims 1 to 9, wherein the electronic device further comprises a third system interface, and the changing the device currently used for a call to the third call device comprises:
obtaining information about the third call device through the third system interface, wherein the information about the third call device comprises information that indicates a device type; and
changing, based on device types of the second call device and the third call device, the device currently used for a call from the second call device to the third call device.

12. The method according to claim 11, wherein the second call device is a Bluetooth device, the third call device is a non-Bluetooth device, and the changing, based on device types of the second call device and the third call device, the device currently used for a call from the second call device to the third call device comprises:
setting the third call device as a call device with a highest priority in a call policy, wherein the call policy is a policy used to select the device currently used for a call; and
disconnecting a communication channel of the second call device.

13. The method according to claim 11, wherein the second call device is a Bluetooth device, the third call device is a Bluetooth device, and the changing, based on device types of the second call device and the third call device, the device currently used for a call from the second call device to the third call device comprises:
disconnecting a communication channel of the second call device;
establishing a communication channel of the third call device; and
switching a communication channel connected to a call audio to the communication channel of the third call device.

14. The method according to claim 11, wherein the second call device is a non-Bluetooth device, the third call device is a Bluetooth device, and the changing, based on device types of the second call device and the third call device, the device currently used for a call from the second call device to the third call device comprises:
establishing a communication channel of the third call device; and
connecting a call audio to the communication channel of the third call device.

15. The method according to any one of claims 1 to 14, wherein information about any one of the call devices is a target device type, and the target device type comprises device attribute information and an interface used to obtain or set the device attribute information.

16. The method according to claim 15, wherein the device attribute information comprises a device type number, a device address, and a device name.

17. A device management apparatus, wherein the apparatus is configured to perform the device management method according to any one of claims 1 to 16.

18. An electronic device, comprising a memory and a processor, wherein the memory is coupled to the processor, the memory stores program instructions, and when the program instructions are executed by the processor, the electronic device is enabled to perform the device management method according to any one of claims 1 to 16.

19. A computer-readable storage medium, comprising a computer program, wherein when the computer program is run on an electronic device, the electronic device is enabled to perform the device management method according to any one of claims 1 to 16.

20. A computer program product comprising instructions, wherein when the computer program product runs on a computer, the computer is enabled to perform the device management method according to any one of claims 1 to 16.

21. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the device management method according to any one of claims 1 to 16.
